# EUROPÄISCHE PATENTSCHRIFT

(11) **EP 2 765 388 B1**
(45) Veröffentlichungstag und Bekanntmachung des Hinweises auf die Patenterteilung: **17.10.2018**
(21) Anmeldenummer: 13154696.2
(22) Anmeldetag: 08.02.2013
(51) Int. Cl.: G01C 15/00, G01S 17/06, G01S 17/42, G01S 17/66, G01S 17/87, G01S 3/782, G01S 7/00, G01S 17/02

(54) **Mobiler Feld-Controller zur Messung und Fernsteuerung**
Mobile field controller for measuring and remote control
Contrôleur de terrain mobile destiné à arpentage et commande à distance

(43) Veröffentlichungstag der Anmeldung: 13.08.2014
(73) Patentinhaber: Hexagon Technology Center GmbH, 9435 Heerbrugg (CH)
(72) Erfinder: Neier, Gunnar, A-6850 Dornbirn (AT); Metzler, Bernhard, A-6850 Dornbirn (AT)
(74) Vertreter: Kaminski Harmann

(56) Entgegenhaltungen:
- EP-A1- 2 431 708
- WO-A1-2014/095784
- WO-A2-2008/067349
- US-A1- 2005 057 745

## Beschreibung

Die Erfindung betrifft einen mobilen, handhaltbaren Feld-Controller, der zusammen mit einem fernsteuerbaren geodätischen Vermessungsgerät nach dem Oberbegriff des Anspruchs 1 ein System zur geodätischen Vermessung bildet.

Zum Vermessen eines oder insbesondere mehrerer Zielpunkte sind seit der Antike zahlreiche geodätische Vermessungsgeräte bekannt. Als räumliche Standarddaten werden dabei Entfernung und Richtung bzw. Winkel von einem Vermessungsgerät, dessen absolute Position bekannt ist, zum zu vermessenden Zielpunkt aufgenommen. Allgemein bekannte moderne Beispiele für solche geodätische Vermessungsgeräte sind Tachymeter und Totalstationen, die auch als elektronischer Tachymeter oder Computer-Tachymeter bezeichnet werden. Ein geodätisches Vermessungsgerät des Stands der Technik ist beispielsweise in der EP 1 686 350 beschrieben.

Oft ist der Zielpunkt, z.B. ein Grenzstein, aufgrund von Hindernissen, die eine Sichtlinie unterbinden, nicht direkt vom Vermessungsgerät anzielbar. Deshalb erfolgt in vielen geodätischen Anwendungen eine Vermessung von Punkten, indem auf diesen speziell ausgestaltete Zielobjekte platziert werden. Nach dem Stand der Technik bestehen diese aus einem Stab als Objektträger mit einer anzielbaren Markierung bzw. einem Retroreflektor als Zielobjekt. Zur Vermessung wird die Spitze dieses Lotstabs mit dem Zielpunkt in Bodenkontakt gebracht und zur Richtungsbestimmung lotrecht gehalten werden. Zur Entfernungsbestimmung wird dabei durch Drehung des Stabes um seine vertikale Achse dieser horizontal so ausgerichtet werden, dass die Markierung bzw. der Reflektor ein vom Vermessungsgerät ausgesandtes Lichtsignal in dessen Richtung zurückwirft. Alternativ finden 360°-Reflektoren Anwendung, die aus jeder beliebigen horizontalen Ausrichtung Lichtsignale zurückwerfen. Diese Vorgehensweise erfordert zwei Benutzer: einen, der das Vermessungsgerät bedient und einen zum Platzieren und Halten des Zielobjekts.

Um geodätische Vermessung durch einen Benutzer alleine zu ermöglichen, verfügen Totalstationen nach dem Stand der Technik über Mittel zur Motorisierung der Zieloptik, zur automatischen Zielsuche und -verfolgung und zur Fernsteuerung des gesamten Geräts, wodurch Messungen mittels einer geeigneten Fernsteuereinheit vom Zielpunkt aus durchführbar sind. Moderne Totalstationen beinhalten ausserdem Mikroprozessoren zur digitalen Weiterverarbeitung und Speicherung erfasster Messdaten und eine Funkdatenschnittstelle zum Aufbau einer Funkverbindung zu externen Peripheriekomponenten wie z.B. zu einem Datenerfassungsgerät, welches insbesondere als Feldrechner ausgebildet sein kann. Mittels der Datenschnittstelle ist es möglich, von der Totalstation erfasste und gespeicherte Messdaten zur externen Weiterverarbeitung auszugeben, extern erfasste Messdaten zur Speicherung und/oder Weiterverarbeitung in die Totalstation einzulesen und Fernsteuersignale zur Fernsteuerung der Totalstation oder einer weiteren externen Komponente insbesondere im mobilen Feldeinsatz ein- bzw. auszugeben. Moderne Geräte können eine in Zielrichtung ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts wie z.B. einem Feldrechner dargestellt werden kann.

Das Anzielen eines Zielreflektors kann dabei insbesondere mittels dieses dem Benutzer im Display der Fernbedieneinheit angezeigten Live-Bildes erfolgen. Demnach kann der Benutzer die Totalstation anhand des Live-Bildes entsprechend auf das gewünschte, im Live-Bild erkennbare Ziel ausrichten.

Entsprechende zur Fernsteuerung geeignete Peripheriegeräte des Stands der Technik verfügen über Funkdatenschnittstellen zur kabellosen Kommunikation und Datentransfer mit der Totalstation oder anderen externen Geräten und Steuereinheiten mit entsprechender Steuerungssoftware. Über eine Auswerteeinheit können empfangene Daten ausgewertet und über ein Ausgabemittel z.B. einem elektronischen Display für den Benutzer dargestellt werden. Des Weiteren kann der Benutzer über Eingabemittel z.B. eine Tastatur oder berührungssensitives Display mit der Fernsteuereinheit und darüber mit dem Vermessungsgerät kommunizieren. Somit ist es dem Benutzer möglich, vom zu vermessenden Zielpunkt aus Messungen zu initialisieren und durchzuführen und deren Ergebnisse zu erfassen. Durch Speicherung in der Totalstation, dem Feld-Controller oder einem externen Speicher ist ein Zugriff auf Daten zu einem späteren Zeitpunkt möglich. Beispiele für derartige Geräte sind die Feld-Controller CS10 und CS15 von Leica Geosystems.

In der Kombination aus geodätischem Vermessungsgerät, Fernsteuereinheit und Zielobjektträger erhält man ein Ein-Personen-Messsystem. Meist wird dabei der Zielobjektträger auch als Träger für die Fernsteuereinheit verwendet, sprich der Feld-Controller ist mittels einer entsprechenden Halterung am Lotstab anbringbar.

Nachteilig an der Verwendung eines solchen Stabs zur geodätischen Vermessung ist generell, dass das Befördern und Tragen eines i.d.R. über zwei Meter langen und damit unhandlichen Stabes für den Benutzer umständlich und in schwierig begehbarem Gelände, z.B. einem Waldgebiet, mühevoll ist. Zudem ist eine lotrechte Aufstellung des Stabes mit einem gewissen Zeitaufwand verbunden und ein lotrechtes Halten während der Messung für den Benutzer mühsam. Ein nicht fachgemässes Aufstellen des Stabes auf dem Zielpunkt ist eine Fehlerquelle für eine falsche Positionsbestimmung.

Nachteilig ist weiters, dass bei einer geodätischen Vermessung Zielpunkte so gelegen sein können, dass eine lotrechte Positionierung des Stabs auf dem Zielpunkt nicht möglich ist oder überhaupt kein physischer Kontakt hergestellt werden kann, z.B. falls der Zielpunkt eine Gebäudeecke ist, falls Sichthindernisse, z.B. Büsche und Bäume, zwischen der Totalstation und dem Zielobjekt vorhanden sind oder falls die Umgebung des Zielpunktes von Benutzer nicht betreten werden kann. Solche Situationen erfordern spezifische Messmethoden, die mit zusätzlichem Zeitaufwand verbunden sind.
US 6381006 B1 offenbart ein Verfahren und ein entsprechendes Gerät, womit eine Vermessung unzugänglicher Zielpunkte möglich ist. Hierzu ist ein Lotstab mit mindestens zwei Sensorelementen bestückt, deren absolute Positionen mittels einer oder mehrerer Referenzstationen, bspw. eines geodätischen Vermessungsgerätes, bestimmt werden. Weiter weist der Lotstab ein Entfernungsmessgerät auf, das die Entfernung zwischen Entfernungsmessgerät und einem zu vermessenden Zielpunkt misst. Die Positionen der Sensorelemente und des Entfernungsmessgerätes relativ zueinander und die Orientierung der Entfernungsmessrichtung sind bekannt. Damit kann aus der gemessenen Entfernung und den gemessenen absoluten Positionen der Sensorelemente die absolute Position eines Zielpunktes berechnet werden.

Mit diesem Verfahren werden allerdings nicht die oben beschriebenen Nachteile vermieden, die mit der Verwendung eines Lotstabes verbunden sind. Weiter ist nachteilig, dass mindestens zwei Sensorelemente zur absoluten Positionsbestimmung notwendig sind, die zudem für eine ausreichende Auflösungsgenauigkeit einen gewissen Mindestabstand zueinander aufweisen müssen. Dadurch wird der Lotstab noch unhandlicher, worauf auch die Anmerkung in US 6381006 B1 hindeutet, dass vorzugsweise auf eine ausgewogene Anordnung der Komponenten hinsichtlich Gewichtsverteilung geachtet wird.

US 5903235 offenbart ein handhaltbares geodätisches Vermessungsgerät, mit dem Vermessungen ohne Verwendung eines Entfernungs- und Richtungsmessfunktionalität aufweisenden geodätischen Vermessungsgerät und ohne Verwendung eines Lotstabs durchführbar sind. Dabei wird der zu vermessende Zielpunkt mit einer Zeigeeinheit z.B. einem Laserpointer angezielt. Die Position des Vermessungsgeräts relativ zum Zielpunkt wird zum einen durch Messung der Entfernung zwischen Gerät und Zielpunkt in definierter Richtung mittels einer integrierten Entfernungsmesseinheit ermittelt. Es ist dabei nicht notwendig, das Gerät lotrecht über dem Zielpunkt auszurichten, da eine Komponente integriert ist, die die Neigung relativ zum Gravitationsvektor bestimmt. Die absolute Position des Vermessungsgeräts wird über eine GNSS-Empfangseinheit bestimmt, wodurch letztlich aufgrund der vorhergehenden Messungen die absolute Position des Zielpunktes errechnet werden kann. Somit entfällt das Handling eines Lotstabes und es sind Zielpunkte vermessbar, die mit einem Lotstab nicht physisch kontaktierbar wären.
Jedoch ist mit GNSS-basierten Systemen, selbst unter Verwendung von Korrektursignalen, nur eine weniger genaue Bestimmung der Position von Zielpunkten möglich als mit Systemen, die auf Verwendung der Entfernungs- und Richtungsmessfunktionalität eines entsprechenden geodätischen Vermessungsgeräts basieren. Zudem ist eine Positionsbestimmung an den Empfang einer ausreichenden Anzahl von GNSS-Signalen gebunden, der nicht immer gegeben ist, z.B. beim Tunnelbau oder in engen Strassenfluchten. Aufgabe der vorliegenden Erfindung ist es deshalb, ein handhaltbares Gerät bereitzustellen, das durch Aufweisen eines geodätischen Zielobjekts zusammen mit einem eine Entfernungs- und Richtungsmessfunktionalität aufweisenden geodätischen Vermessungsgerät ein System zur geodätischen Vermessung von Zielpunkten basierend auf Entfernungs- und Richtungsmessung ermöglicht.
Aufgabe der vorliegenden Erfindung ist es weiter, ein handhaltbares Gerät bereitzustellen, mit dem geodätische Vermessungen durchführbar sind ohne physischen Kontakt zu einem Zielpunkt oder Geländepunkt in dessen unmittelbarer Umgebung herzustellen, insbesondere ohne einen Lotstab zu verwenden. Unter einem Geländepunkt ist hierbei auch ein Punkt an vom Menschen hergestellten Objekten wie Gebäuden zu verstehen.
Erfindungsgemäss werden diese Aufgaben durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Gegenstand der Erfindung ist ein mobiler, handhaltbarer Feld-Controller, mit dem ein eine Entfernungs- und Richtungsmessfunktionalität aufweisendes geodätischen Vermessungsgerät, insbesondere eine Totalstation oder ein Tachymeter, fernsteuerbar ist, dergestalt, dass Positionsvermessungen von geodätischen Zielpunkten unter Verwendung der Entfernungs- und Richtungsmessfunktionalität des Vermessungsgeräts durch einen Benutzer alleine durchgeführt werden, ohne dass dazu ein physischer Kontakt zu einem Zielpunkt oder Geländepunkt in dessen Umgebung hergestellt wird. Der Zielpunkt ist durch den erfindungsgemässen Feld-Controller optisch markierbar.

Der Feld-Controller weist weiterhin eine Steuer- und Auswerteeinheit auf, mit Eingabe- und Ausgabemittel für die Benutzerführung, insbesondere ein elektronisches Display, das berührungssensitiv sein kann. Der Grossteil der Eingabe- und Ausgabemittel ist hierbei an der Gehäusefrontseite angebracht. Weiter weist der Feld-Controller Komponenten zum Datentransfer auf, insbesondere eine Funkdatenschnittstelle zur Fernsteuerung und Datenempfang vom Vermessungsgerät.

Erfindungsgemäss weist der Feld-Controller ein vom geodätischen Vermessungsgerät anzielbares geodätischen Zielobjekt auf, dessen Zielposition vom Vermessungsgerät mittels Richtungs- und laserstrahlbasierter Entfernungsmessung hochpräzise bestimmbar ist, insbesondere ausgeprägt als ein Retroreflektor.

Erfindungsgemäss weist der Feld-Controller weiterhin ein handhaltbares Gehäuse auf. Das handhaltbare Gehäuse ist Träger des geodätischen Zielobjekts. Dazu weist das Gehäuse Merkmale auf, die einen dauerhaften Anschluss des Zielobjekts an das Gehäuse sicherstellen, welche den Anforderungen eines Einsatzes im Feld genügt. Das Gehäuse bildet, je nach Ausführungsform des erfindungsgemässen Feld-Controllers, mit dem Zielobjekt eine Einheit, so dass das Zielobjekt nicht oder allenfalls zu Wartungszwecken vom Gehäuse entfernbar ist. Alternativ ist der Feld-Controller derart ausgebildet, dass das Zielobjekt austauschbar am Gehäuse befestigt ist, so dass verschiedene Zielobjektsausführungen am Gehäuse befestigbar sind. Je nach Ausführungsform des erfindungsgemässen Feld-Controllers ist das Zielobjekt direkt am Gehäuse oder in einer entsprechenden Aussparung des Gehäuses befestigt oder das Zielobjekt wird über einen am Gehäuse befestigten Aufsatz vom Gehäuse getragen, insbesondere einer Abstandshalterung von 5cm bis 25cm Länge. Die Abstandshalterung kann je nach Ausführungsform des Feld-Controllers ebenfalls austauschbar sein, wobei insbesondere die Abstandshalterung dann eine Codierung aufweist, mittels der die Steuer- und Auswerteeinheit die Länge der Abstandshalterung automatisch ermitteln kann.

Der erfindungsgemässe Feld-Controller weist eine Entfernungsmesseinheit auf, mit der die Entfernung zwischen Feld-Controller und mindestens einem Geländepunkt, insbesondere mindestens einem Zielpunkt, kontaktlos messbar ist, insbesondere eine Einheit zur elektroakustischen oder elektrooptischen Entfernungsmessung. Die erfindungsgemässe Entfernungsmesseinheit kann bspw. als Laserentfernungsmesser ausgebildet sein, wobei der Laser vorteilhaft sichtbares Licht emittiert, wodurch mit dem Laserentfernungsmesser ein Zielpunkt auch optisch markierbar ist. Falls in der konkreten Ausführungsform des Feld-Controllers die Messrichtung nicht vordefiniert, sondern veränderbar ist, wird die jeweilige Messrichtung von der Entfernungsmesseinheit bestimmt.

Erfindungsgemäss ist die räumliche Position von geodätischem Zielobjekt und Entfernungsmesseinheit relativ zu einem Bezugspunkt des Feld-Controllers d.h. eines Feld-Controller-internen Bezugssystems bekannt und in der Steuer- und Auswerteeinheit eingespeichert oder messbar und in die Steuer- und Auswerteeinheit einspeicherbar.

Die Anordnung der Entfernungsmesseinheit und des geodätischen Zielobjekts im bzw. am Gehäuse ist so gestaltet, dass eine ergonomische Handhabung des Feld-Controller gewährleistet ist. Hierzu sind erfindungsgemäss Entfernungsmesseinheit bzw. zumindest deren Signalsende- und Empfangsteil und geodätisches Zielobjekt vorzugsweise so an anderen Gehäuseseiten als der Gehäusefrontseite gelegen, dass der Benutzer den Feld-Controller an einem Zielpunkt bequem halten kann und gleichzeitig der Zielpunkt optisch markiert, dessen Entfernung zum Feld-Controller gemessen und das Zielobjekt vom Vermessungsgerät angezielt werden kann, insbesondere, wenn der Zielpunkt ein Bodenpunkt ist. Vorzugsweise sind erfindungsgemäss Zielobjekt und Entfernungsmesseinheit nicht an gleichen Gehäuseseiten angeordnet. Da für die Anzielbarkeit eine möglichst bodenentfernte Anordnung des Zielobjekts zu bevorzugen ist, ist das Zielobjekt an einer Gehäuseseite befestigt, die "oben" definiert bzw. an einer Gehäuseseite in einem Bereich befestigt, der "oben" definiert, während die Entfernungsmesseinheit vorzugsweise an einer entgegen gesetzten "unteren" Gehäuseseite bzw. Seitenbereich angeordnet ist, da i.d.R. Bodenpunkte zu vermessen sind.

Für eine ergonomischen Handhabung sind erfindungsgemäss die Einheiten im bzw. am Gehäuse hinsichtlich der Gewichtsverteilung vorteilhaft angeordnet, so dass der Schwerpunkt des Feld-Controllers sich auf seiner Längsachse nahe des Gehäusezentrums befindet, an dem der Benutzer den Feld-Controller festhält. Hierzu ist insbesondere ein grosser Retroreflektor aufgrund seines relativ hohen Gewichtes derart am Gehäuse befestigt, dass sein Drehmoment bezogen auf das Gehäusezentrum bei regulärer Benutzerhandhabung des Feld-Controllers klein ist. Dies wird erreicht durch Anordnung nahe am Gehäuse und/oder eine Anordnung dergestalt, dass der Gewichtsvektor des Retroreflektors die Richtung zum Schwerpunkt des restlichen Feld-Controllers hat. Hierzu kann z.B. der Retroreflektor so an einer Gehäuseseite befestigt sein, dass seine Längsachse einen Winkel deutlich kleiner als 90°, z.B. 45°, mit der Seitenebene bildet. In einer speziellen Ausführungsform des erfindungsgemässen Feld-Controllers ist das geodätische Zielobjekt mittels eines Gelenks am Gehäuse befestigt, so dass die Ausrichtung seiner Längsachse innerhalb eines bestimmten Winkelbereichs in mindestens eine Richtung variabel ist, um die Anordnung des Zielobjekts hinsichtlich Gewichtsverteilung und/oder Anzielbarkeit für den Benutzer optimierbar zu gestalten. Insbesondere weist das Gelenk hierbei Positionssensoren auf, die die Ausrichtung der Längsachse messen, um die räumliche Position von geodätischem Zielobjekt relativ zu einem Bezugspunkt des Feld-Controllers bestimmbar zu machen.

Weiterhin weist der Feld-Controller Merkmale auf, wodurch eine räumliche Orientierung des Feld-Controllers selbst bestimmbar ist, entweder durch den Feld-Controller alleine oder im System mit dem geodätischen Vermessungsgerät. Insbesondere weist der erfindungsgemässe Feld-Controller hierzu Neigungs- oder Beschleunigungssensoren auf und/oder eine vom Vermessungsgerät optisch anvisierbare Einheit, mittels der die räumliche Orientierung durch Vergleich mit einer Referenzausrichtung beispielsweise eines Laserstrahls zumindest teilweise bestimmbar ist.

Die bekannte räumliche Orientierung des Feld-Controllers kann genutzt werden, um mit einer speziellen Ausführungsform des erfindungsgemässen Feld-Controllers, bei der dieser mehrere geodätische Zielobjekte aufweist, eine freiere Handhabung des Geräts zu ermöglichen. Hierzu ist vorzugsweise auf jeder Gehäuseseite je ein geodätisches Zielobjekt angebracht. Da über die räumliche Orientierung auch die Ausrichtung relativ zum Vermessungsgerät bekannt ist, kann eindeutig zugeordnet werden, welches Zielobjekt angezielt wird. Das Anzielen eines anderen Zielobjekts stellt somit keinen Verlust an Positionsinformation dar, was einen Wechsel der Ausrichtung oder mit einem entsprechenden Vermessungsgerät eine automatisierte Wahl des am besten anzielbaren Zielobjekts ermöglicht.

Die Steuer- und Auswerteeinheit ist erfindungsgemäss derart ausgeprägt, dass alle zur Positionsvermessung notwendigen Schritte mit dem Feld-Controller manuell oder automatisiert mittels eingespeicherter Routinen auslösbar, steuerbar und kontrollierbar sind, naturgemäss abgesehen vom manuellen Aufstellen des Vermessungsgeräts zu Beginn. Die Steuer- und Auswerteeinheit ist erfindungsgemäss vorzugsweise derart ausgeprägt, dass sie alle zur Positionsberechnung eines Zielpunkts notwendigen (Mess-) Daten erfasst und/oder bereit stellt und auswertet und noch am Vermessungsort die Position eines Zielpunktes dem Benutzer ausgibt und abspeichert.

Eine geodätische Vermessung ist unter Verwendung des Feld-Controllers am Ort eines Zielpunktes durchführbar. Sofern nach Aufstellen des Vermessungsgeräts noch Steuerbefehle an dieses notwendig sind, sind diese manuell oder automatisiert mittels des Feld-Controllers drahtlos übermittelbar. Zum Vermessen begibt sich der Benutzer mit dem Feld-Controller an oder in die Nähe des Zielpunktes. Mit dem Feld-Controller wird mindestens ein Zielpunkt optisch markiert. Die Bestimmung der geodätischen Koordinaten des Zielpunkts erfolgt anhand drei separater Messungen, die im Folgenden beschrieben werden.

Eine Messung bestimmt die Entfernung zwischen dem Zielpunkt und dem Feld-Controller. Hierunter ist die Entfernung zwischen dem Zielpunkt und einem Punkt des Feld-Controller-internen Referenzbezugssystems zu verstehen. Falls die Messrichtung nicht vordefiniert ist, wird diese zusätzlich bestimmt, um die Koordinaten des Zielpunkts bezüglich des Referenzbezugssystems eindeutig zu bestimmen. Eine zweite Messung bestimmt die räumliche Orientierung des Feld-Controllers, d.h. Neigungs-, Roll-, und Gier- bzw. Azimutalwinkel und damit die räumliche Orientierung des Referenzbezugssytems relativ zum absoluten äusseren Bezugssystem. Eine dritte Messung erfolgt durch das Vermessungsgerät, wodurch die Position des geodätischen Zielobjekts im absoluten Bezugssystem bestimmt wird. Aus der absoluten Position des geodätischen Zielobjekts wird mittels der bestimmten räumlichen Orientierung des Feld-Controllers und der Entfernung Zielpunkt - Feld-Controller unter Kenntnis der Position des geodätischen Zielobjekts im Feld-Controller-internen Bezugssystem die absolute Position des Zielpunktes berechnet.

In einer alternativen Ausführungsform des erfindungsgemässen Feld-Controllers ist dieser derart ausgeprägt, dass die Entfernung zum Feld-Controller nicht eines einzelnen Geländepunkts vermessen wird, sondern eine 3D-Punktwolke innerhalb eines bestimmten zusammenhängenden Bereichs um einen Geländepunkt herum erstellt wird. Hierzu gibt es verschiedene Realisierungsmöglichkeiten:
- Werden fortlaufend Messwerte aufgenommen, ist es im einfachsten Fall dazu ausreichend, dass der Benutzer gleichzeitig den Feld-Controller innerhalb eines bestimmten Bereichs bewegt. Die vielen einzelnen absoluten Positionsdaten der vermessenen Geländepunkte werden von der Steuer- und Auswerteeinheit zu einer 3D-Punktwolke zusammengeführt.
- In einer fortgeführten Ausführungsform der Entfernungsmesseinheit ist diese als Laserscanner ausgeprägt, der eine Vielzahl von Geländepunkten eines definierten zusammenhängenden Bereichs hinsichtlich Richtung und Entfernung vermisst, bspw. indem ein Laserstrahl mittels eines bewegten Spiegels über den Bereich geführt wird, und als 3D-Punktwolke speichert.
- Alternativ kann die Entfernungsmesseinheit als Range-Image-(RIM)-Kamera zur Aufnahme dreidimensionaler Bilder ausgeprägt sein, die einer Vielzahl von Bildpunkten eines bestimmten Sichtfeldes jeweils eine Tiefeninformation zuordnet und somit eine 3D-Punktwolke generiert.
- Auch kann die Erzeugung einer 3D-Punktwolke mittels einer Stereokamera, einem Lichtstrukturen-3D-Scanner, oder weiteren entsprechenden Geräten des Stands der Technik oder mit Kombination der verschiedenen Geräte geschehen.

Erfindungsgemäss kann somit eine 3D-Punktwolke als Ganzes absolut referenziert werden. In der ersten der oben genannten Varianten geschieht dies automatisch, da sich die Punktwolke aus vielen bereits absolut referenzierten Punkten zusammensetzt. Bei den anderen Optionen geschieht dies durch Berechnung anhand der Werte einer oder mehrerer absoluten Positionsmessungen und Orientierungsbestimmungen. Ein solches Vorgehen kann z.B. erwünscht sein, wenn bei einer kleinräumigen Vermessung viele Zielpunkte nahe beieinander liegen.

Die 3D-Punktwolke kann weiter so ausgewertet werden, dass die Koordinaten eines Zielpunkts bezüglich des internen Referenzbezugssystems alternativ zu einer direkten Positionsvermessung bestimmbar sind. Zur Auswertung der 3D-Punktwolke in dieser Hinsicht sind erfindungsgemäss in der Steuer- und Auswerteeinheit der alternativen Ausführungsform des erfindungsgemässen Feld-Controllers entsprechende Algorithmen eingespeichert. Mit solchen ist ein Erkennen bestimmter geometrischer Geländeeigenschaften wie z.B. einer Bodenebene oder eine durch eine Hauswand gebildete Ebene möglich. Insbesondere sind Algorithmen hinterlegt, mit denen spezielle geometrische Grundformen, bspw. Geraden, auffindbar sind, die bestimmten Geländeformen wie Strassen oder Hauswänden zugeordnet werden können. Damit ist ein Zielpunkt wie z.B. eine Hausecke identifizierbar als Schnittpunkt der zwei von den Hauswänden gebildeten Ebenen und der vom Boden gebildeten Ebene. Die Koordinaten eines solchen Zielpunkts bezüglich des internen Referenzbezugssystems ergeben sich direkt aus den Scan- bzw. RIM-Daten, indem die Entfernungsmessdaten des identifizierten Zielpunktes übernommen werden. Falls z.B. unmittelbar vom Zielpunkt keine Daten vorliegen und das Gelände innerhalb einer definierten kleinräumigen Zone um den Zielpunkt keine Diskontinuitäten besitzt, können auch die Messdaten eines Geländepunktes in dieser Zone als Zielpunktskoordinaten verwendet oder aus den Koordinaten umliegender Punkte die Zielpunktskoordinaten interpoliert werden.

Alternativ können erfindungsgemäss anschliessend an eine geometrische Bildanalyse der 3D-Punktwolke Zielpunktskoordinaten mittels Extrapolation gefitteter geometrischer Figuren berechnet werden, beispielsweise als extrapolierter Punkt einer Strecke oder indem ein Zielpunkt als Punkt mit speziellen geometrischen Eigenschaften aufgefasst wird. Beispielsweise kann eine Hausecke als Schnittpunkt dreier Ebenen aufgefasst werden, die durch die zwei Wände und den Boden gebildet werden. Auf Grundlage der Daten der 3D-Punktwolke werden entsprechend drei Ebenengleichungen berechnet, die den bestmöglichen Fit mit den Messdaten bieten, und der Schnittpunkt der drei Ebenen berechnet. Dessen berechneten Koordinaten werden als Zielpunktskoordinaten ausgegeben.

Weist der erfindungsgemässe Feld-Controller zusätzlich eine digitale Kamera auf, die ein dem Scannbereich bzw. Sichtfeld entsprechendes 2D-Bild aufnimmt, können ermittelte Zielpunktskoordinaten verwendet werden, um auf dem elektronischen Display der Steuer- und Auswerteeinheit ein 2D-Bild auszugeben, dem der Zielpunkt überlagert wird, so dass der Zielpunkt optisch markiert ist. Hierüber kann der Benutzer eine Eingabe veranlassen, z.B. eine Datenspeicherung, Datenkorrektur oder Auslösen einer weiteren Messung. Beispielsweise kann eine RIM-Aufnahme zu einer ersten Grobmessung zur Zielpunktsidentifikation verwendet werden, um anschliessend nach Zielpunktsauswahl durch den Benutzer, insbesondere mittels eines Touch-Screens, eine zweite exaktere Entfernungsmessung durch einen Laserentfernungsmesser vorzunehmen.
Weist der erfindungsgemässe Feld-Controller eine 2D-Kamera auf, ist eine optische Markierung eines Zielpunktes mit einer Entfernungsmesseinheit auch einfach dergestalt durchführbar, dass dem 2D-Bild ein Fadenkreuz überlagert wird, das den aktuellen Anzielpunkt der Entfernungsmesseinheit anzeigt. Hierzu muss der Offset zwischen Kameraachse und Messachse der Entfernungsmesseinheit bekannt sein. Weist der erfindungsgemässe Feld-Controller eine Entfernungsmesseinheit mit veränderbarer Messrichtung auf, kann umgekehrt die Fadenkreuzanzeige durch Kopplung mit der Entfernungsmesseinheit und entsprechende Steuermechanismen vom Benutzer benutzt werden, um die Messrichtung auf einen Zielpunkt auszurichten.
Einem solchen 2D-Bild lassen sich auch sonstige durch die Steuer- und Auswerteeinheit ermittelte Punkte oder geometrische Figuren überlagern. Derartige Punkte oder Figuren können durch Bildverarbeitung auch aus dem 2D-Bild selbst erstellt worden sein. Dazu sind Algorithmen zur digitalen Bildverarbeitung, z.B. Hough-Transformation oder Kantenextraktion, hinterlegt, die die Bilddaten hinsichtlich geometrischer Formen analysieren und daraus z.B. Schnittpunkte berechnen. Ein solcher Schnittpunkt kann der gesuchte Zielpunkt sein, dessen Entfernung dann z.B. durch einen Laserdistanzmesser automatisch gemessen werden kann. Alternativ kann ein oder mehrere berechnete Punkte auf dem Display angezeigt werden, damit der Benutzer einen in Frage kommenden Zielpunkt für eine Distanzbestimmung manuell auswählt, oder der Benutzer kann gefittete geometrische Figuren kontrollieren und ggf. korrigieren.

Der erfindungsgemässe Feld-Controller wird nachfolgend anhand von den in den Zeichnungen schematisch dargestellten Ausführungen und Anwendungsvorgängen näher beschrieben. Im Einzelnen zeigen
- Fig.1: eine Zeichnung einer geodätischen Vermessung mit einem Ein-Personen-Vermessungssystem nach dem Stand der Technik bestehend aus fernsteuerbarem Vermessungsgerät, Lotstab und Feld-Controller,
- Fig.2: eine Zeichnung einer geodätischen Vermessung mit einem Ein-Personen-Vermessungssystem bestehend aus fernsteuerbarem Vermessungsgerät und erfindungsgemässen Feld-Controller,
- Fi. 3a: ein Diagramm der Einzelmessungen einer geodätischen Vermessung mit einem System aus geodätischem Vermessungsgerät und erfindungs-gemässem Feld-Controller,
- Fig. 3b: ein Flussdiagramm eines beispielhaften zeitlichen Ablaufs einer geodätischen Vermessung mit dem erfindungsgemässen Feld-Controller,
- Fig.4a-b: zwei Ausführungsbeispiele des erfindungsgemässen Feld-Controllers,
- Fig.5a-b: zwei Anwendungsbeispiele mit unterschiedlicher erfindungsgemässer Anordnung und Ausprägung von geodätischem Zielobjekt und Entfernungsmess-einheit am bzw. im Gehäuse,
- Fig.6a-c: ein Anwendungs- und Auswertebeispiel eines erfindungsgemässen Feld-Controllers mit Digitalkamera, Entfernungsmesseinheit zur Erstellung einer 3D-Punktwolke und Steuer- und Auswerteeinheit mit eingespeicherten Algorithmen zur Analyse der 3D-Punktwolke und
- Fig.7a-b: ein weiteres Beispiel für die Auswertung von Daten zur Entfernungsmessung durch einen erfindungsgemässen Feld-Controller mit Digital-kamera, Entfernungsmesseinheit zur Erstellung einer 3D-Punktwolke und Steuer- und Auswerte-einheit mit eingespeicherten Algorithmen zur Analyse der 3D-Punktwolke.

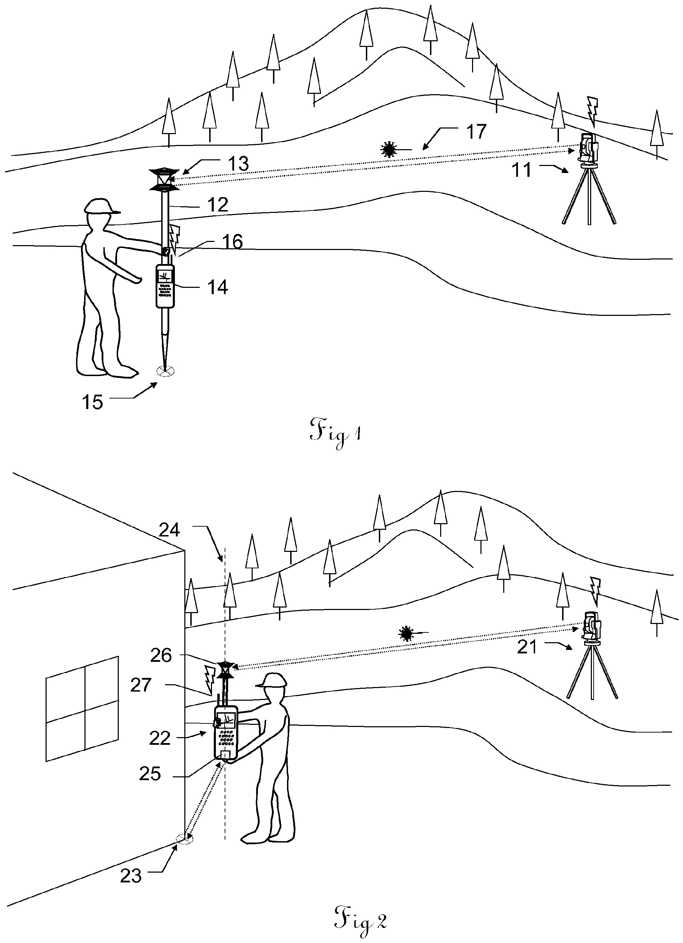

Figur 1 zeigt ein Beispiel für eine geodätische Vermessung mit einem Ein-Personen-Messsystem nach dem Stand der Technik. Nach dem Aufstellen und Ausrichten der Totalstation 11 wird der Lotstab 12 bekannter Länge, der den Reflektor 13 und den Feld-Controller 14 trägt, zum zu vermessenden Zielpunkt 15 transportiert. Dort wird der Lotstab 12 senkrecht auf den Zielpunkt 15 gehalten. Anschliessend wird die durch die Totalstation 11 durchzuführende Entfernungs- und Richtungsmessung manuell oder automatisiert durch Fernsteuerung 16 ausgelöst, insbesondere das Senden und Empfangen des Laserstrahls 17 zur Entfernungsmessung. Aus der gemessen absoluten Reflektorposition und dem bekannten Abstand Reflektor - Zielpunkt wird die absolute Zielpunktposition errechnet.

Figur 2 zeigt eine geodätische Vermessung mit einem Ein-Personen-Messsystem, bestehend aus einer Totalstation 21 und einem erfindungsgemässen Feld-Controller 22. Das Aufstellen und Ausrichten der Totalstation erfolgt nach dem Stand der Technik. Im Gegensatz zu einem Vermessungssystem nach Figur 1 entfällt nun wegen des erfindungsgemässen Feld-Controllers 22 die Notwendigkeit, einen unhandlichen Stab zum Zielpunkt zu transportieren. Zudem ist ein solcher auf dem beispielhaften Zielpunkt 23, einer Hausecke, nicht lotrecht platzierbar. Im dargestellten Beispiel ist eine lotrechte Ausrichtung des erfindungsgemässen Feld-Controllers 22, d.h. seiner Längsachse 24, über dem Zielpunkt 23 nicht erforderlich, da die Messrichtung der Entfernungsmesseinheit 25, die die zur Positionsberechnung des Zielpunkts notwendige Entfernung zwischen Feld-Controller 22 und Zielpunkt 23 misst, nicht parallel zum Gravitationsvektor sein muss, sondern prinzipiell beliebig dazu orientiert sein kann. Sie muss zur Positionsberechnung lediglich bekannt sein. In ähnlicher Weise lässt sich erfindungsgemäss die Notwendigkeit einer lotrechten Ausrichtung über dem Zielpunkt 23 vermeiden, indem das geodätische Zielobjekt 26 nicht entlang der Längsachse 24 ausgerichtet ist, sondern in einer bekannten schrägen Stellung dazu (nicht in Figur 2 dargestellt). Einzige Anforderungen an Position und räumliche Orientierung des erfindungsgemässen Feld-Controllers 22 sind, dass das geodätische Zielobjekt 26 von der Totalstation 21 anzielbar ist und die Entfernungsmesseinheit 25 in Richtung des Zielpunktes 23 messen kann. Ist der Feld-Controller 22 derart positioniert, ist eine Vermessung vollständig mittels des Feld-Controllers 22 und eingebauter Fernsteuerung 27 von dieser Position aus durchführbar.

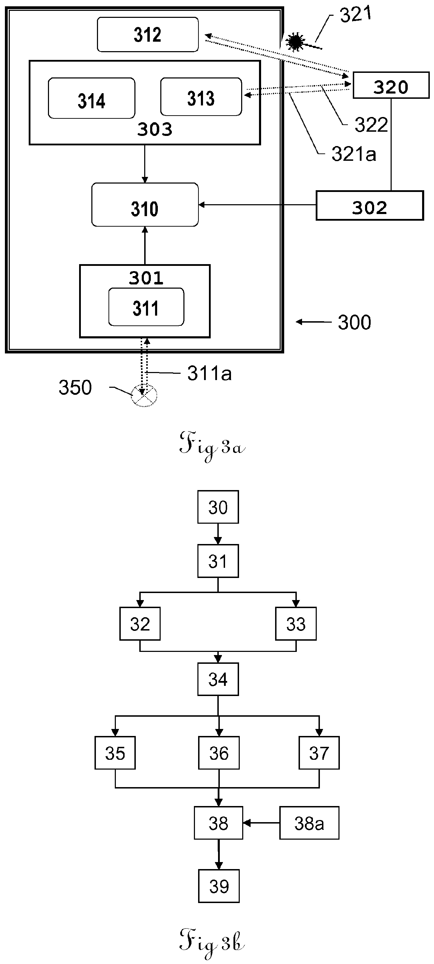

Figur 3a zeigt schematisch die einzelne Hauptabschnitte einer geodätischen Vermessung zur Positionsbestimmung eines Zielpunktes 350 mit einem System aus einem geodätischen Vermessungsgerät 320 nach dem Stand der Technik, beispielsweise einer Totalstation, und erfindungsgemässem Feld-Controller 300. Zur Berechnung der absoluten Position des Zielpunktes 350 müssen der Steuer- und Auswerteeinheit 310 grundsätzlich Daten 301 der Entfernung zwischen Feld-Controller 300 und Zielpunkt 350 bzw. der Position des Zielpunktes 350 relativ zum Feld-Controller 300, Daten 303 über die räumliche Orientierung des Feld-Controllers 300, und Daten 302 über die absolute Position des Zielobjekts 312 zugeführt werden. Ein je nach Geräteausführung möglicherweise notwendiger Datentransfer von der Steuer- und Auswerteeinheit 310 zur Entfernungsmesseinheit 312, zur optisch anvisierbaren Einheit 313 und zum Vermessungsgerät 320, z.B. Steuersignale, sind der Übersichtlichkeit halber nicht eingezeichnet.

Die absolute Position des geodätischen Zielobjekts 312 ist Anknüpfungspunkt an das äussere, absolute Bezugssystem. Diese Position wird durch Positionsvermessung mittels des geodätischen Vermessungsgeräts 320 nach dem Stand der Technik bestimmt, in dem die Richtungswinkel und mittels Laufzeit- und/oder Phasenmessung eines vom Vermessungsgerät 320 emittierten Laserstrahls 321 die Entfernung des Zielobjekts 312 relativ zur bekannten absoluten Position des Vermessungsgeräts 320 vom Vermessungsgerät 320 gemessen werden. Aus Winkel und Entfernung und absoluter Position des Vermessungsgeräts 320 wird die absolute Position des Zielobjekts 312 berechnet. I.d.R. geschieht diese Berechnung in einer Auswerteeinheit des Vermessungsgeräts 320, so dass das Vermessungsgerät 320 die absoluten Positionsdaten des geodätischen Zielobjekts 312 an die Steuer- und Auswerteeinheit 310 des Feld-Controllers 300 transferiert. Erfindungsgemäss können aber auch die Messdaten an die Steuer- und Auswerteeinheit 310 des Feld-Controllers 300 transferiert und dort die absolute Position des Zielobjekts 312 berechnet werden.

An die absolute Position wird erfindungsgemäss das interne Bezugssystem des Feld-Controllers 300 angeknüpft. Hierzu ist die Position des geodätischen Zielobjekts 312 innerhalb dieses Bezugssystems bekannt oder, falls dessen Ausrichtung in der konkreten Ausführungsform des Feld-Controllers 300 relativ zum Gehäuse und damit zu diesem Bezugssystem veränderbar ist, durch entsprechende Winkelsensoren im Feld-Controller 300 messbar.

Zur eindeutigen Bestimmung der Lage des internen Bezugssystems relativ zum absoluten Bezugssystem ist zusätzlich die Kenntnis der Ausrichtung des internen Bezugssystems nötig, also Kenntnis der räumlichen Orientierung des Feld-Controllers 300. Erfindungsgemäss werden diese Orientierungsdaten 303 bestimmt durch im Feld-Controller 300 befindliche Neigungs- und/der Beschleunigungssensoren 314 die Nick- und Rollwinkel messen, im Besonderen in Kombination mit einem oder mehreren Gyroskopen. Der fehlende Gierwinkel ist z.B. durch einen Kompass und im Besonderen in Kombination mit einem Gyroskop bestimmbar, welche der erfindungsgemässe Feld-Controller 300 aufweisen kann.

Zusätzlich oder alternativ sind Neigungswinkel und/oder der Gierwinkel mittels des Vermessungsgeräts 320 durch eine optisch anvisierbare Einheit 313 des Feld-Controllers 300 bestimmbar. Dies geschieht beispielsweise, indem diese Einheit 313 ausgeprägt ist als ein vorbekanntes optisches Muster, dessen natürlicherweise ausgesandte optische Strahlung 322 von einer im Vermessungsgerät 320 befindlichen Kamera als Bild aufgenommen wird und diese Aufnahme mit einem im Vermessungsgerät 320 oder Feld-Controller 300 gespeicherten korrespondierenden Muster verglichen wird, woraus Ausrichtungswinkel ermittelt werden können.

In einer anderen Ausführungsform des erfindungsgemässen Feld-Controllers 300 ist die optisch anvisierbare Einheit 313 als Laserstrahleinfallsrichtungsbestimmer ausgeprägt, der die Einfallsrichtung eines vom Vermessungsgerät in definierte Richtung ausgesandten Laserstrahls 321a, der mit dem Laserstrahl 320 identisch sein kann, ermittelt. Dazu kann die optisch anvisierbare Einheit mit dem geodätischen Zielobjekt verknüpft sein. Die WO 01/09642 A1 beschreibt einen derartigen Retroreflektor, der eine Öffnung aufweist, durch die ein Teil des vom Vermessungsgerät emittierten Laserstrahls passieren kann und auf einen lichtempfindlichen Positionssensor trifft. Alternativ kann der Laserstrahleinfallsrichtungsbestimmer bspw. als Laserstrahldetektor mit mehreren Detektionszonen ausgebildet sein, die den Erfassungsbereich in mehrere Teilerfassungsbereiche segmentieren. Anhand eines Empfangens des Strahls innerhalb einer Detektionszone ist ein Auftreffpunkt des Laserstrahls auf dem Detektor bestimmbar. Jede Detektionszone ist direkt mit einem ebenen Winkel verknüpft, der einer Teilerfassungsrichtung entspricht, woraus Nick- und Gierwinkel des Feld-Controllers bestimmbar sind (Bezeichnungen bezogen auf das absolute Bezugssystem).

Werden Vermessungen unter der Prämisse durchgeführt, dass der Feld-Controller vom Benutzer in einer definiert lotrechten Ausrichtung gehalten wird, kann der Feld-Controller vereinfacht ausgeführt und der Vorgang der Orientierungsbestimmung vereinfacht durchgeführt werden. In einer derartigen Ausführungsform muss der erfindungsgemässe Feld-Controller als Sensoren zur Bestimmung von Ausrichtungswinkeln nur einfache Neigungsindikatoren, mit denen die senkrechte Ausrichtung überprüfbar ist, aufweisen, bspw. mechanische Neigungslibellen. Ist die Entfernungsmesseinheit derart ausgeprägt, dass deren Messrichtung nicht mit der lotrechten Ausrichtung zusammenfällt, sondern mit ihr einen bestimmten Winkel bilden kann, sodass ein Zielpunkt nicht auf einer gemeinsamen lotrechten Achse mit dem geodätischen Zielobjekt liegt, kann der erfindungsgemässe Feld-Controller einen Sensor zur Bestimmung des Azimutalwinkels aufweisen, bspw. einen Kompass. Bei einer Vermessung muss an Orientierungsdaten 303 dann nur dieser Ausrichtungswinkel bestimmt werden.

Aus den vorhergehenden Daten 302, 303, die an die Steuer- und Auswerteeinheit 310 transferiert werden, kann diese somit eine eindeutige Transformationsvorschrift zwischen absolutem, äusseren und internen Bezugssystem des Feld-Controllers 300 berechnen, womit interne Koordinaten des Zielpunkts 350 in absolute Koordinaten umrechenbar sind.

Diese interne Position des Zielpunkts 350, also die Entfernung Zielpunkt 350 - Feld-Controller 300, wird von der Entfernungsmesseinheit 311 bestimmt, deren Position und Ausrichtung im internen Bezugssystem bekannt ist. Diese misst durch Senden und Empfangen eines Messignals 311a, insbesondere Laserstrahlung, entlang einer bekannten Messachse, die Entfernung zwischen Zielpunkt 350 und Entfernungsmesseinheit 311. Im Falle einer Ausführungsform des Feld-Controllers 300 mit veränderbarer Messachsenrichtung wird diese mitbestimmt.

Die Entfernung zwischen Feld-Controller 300 und Zielpunkt 350 bzw. die relativen Zielpunktspositionsdaten 301 werden an die Steuer- und Auswerteeinheit 310 übermittelt, die diese anhand der Transformationsvorschrift in absolute Koordinaten des Zielpunkts 350 umrechnet.

Figur 3b zeigt beispielhaft den zeitlichen Ablauf einer geodätischen Vermessung mit erfindungsgemässem Feld-Controller und geodätischem Vermessungsgerät. Nach dem Aufstellen und Initialisieren des Vermessungsgeräts, 30, positioniert sich der Benutzer mit dem Feld-Controller beim Zielpunkt, 31. Dort wird der Zielpunkt in einer der beschriebenen Weisen optisch markiert und von der Entfernungsmesseinheit anvisiert, 32. Gleichzeitig oder anschliessend wird das geodätische Zielobjekt vom Vermessungsgerät angezielt, 33. Verfügt das Vermessungsgerät über eine Tracking-Funktion, ist ein Anzielen auch laufend möglich, solange eine Sichtverbindung zwischen geodätischem Zielobjekt und Vermessungsgerät besteht.

Naturgemäss muss zur korrekten Ermittlung der Zielpunktskoordinaten den einzelnen Messungen der Orientierungsdaten, der Zielobjektpositionsdaten und der Zielpunktsentfernungsdaten die gleiche Position und räumliche Orientierung des Feld-Controllers zugrunde liegen, d.h. der Feld-Controller darf während eines Vermessungsvorgangs nicht bewegt werden. Um dies zu erreichen, ist der Vermessungsvorgang möglichst kurz zu halten, weshalb die Messungen synchronisiert durchgeführt werden. Hierzu wird an die Messeinheiten ein Triggersignal ausgegeben, das vom Benutzer, der Steuer- und Auswerteeinheit oder einer der Messeinheiten ausgelöst wird, 34. Damit werden ausgelöst synchronisierte Messungen der Entfernung zwischen Feld-Controller und Zielpunkt bzw. die Position des Zielpunktes relativ zum Feld-Controller durch die Entfernungsmesseinheit des Feld-Controllers, 35, der räumlichen Orientierung des Feld-Controllers durch den Feld-Controller und/oder das geodätische Vermessungsgerät, 36, und der absoluten Position des Zielobjekts durch das geodätische Vermessungsgerät, 37. Beispielsweise kann der Benutzer den Zielpunkt mit dem Feld-Controller optisch markieren, anschliessend über das Eingabemittel ein Startsignal an die Steuer- und Auswerteeinheit senden, die synchronisierte Messungen auslöst.

Da ein handgehaltenes Gerät auch bei einem kurzen Messvorgang nicht vollkommen stillgehalten werden kann, kann eine Kompensation solcher Schwankungsbewegungen, eine Tremorkompensation vorgesehen sein. Dies kann dadurch geschehen, dass bei einem Vermessungsdurchgang über einen kurzen Zeitraum, bspw. 5 Sekunden, von den jeweiligen Messeinheiten viele Messwerte aufgenommen werden und aus diesen jeweils ein Mittelwert gebildet wird. Dies ist bei den jeweiligen Messeinheiten nach dem Stand der Technik ohne weiteres möglich bzw. bei der Entfernungsmessung mit Totalstationen ohnehin das übliche Vorgehen. Anstatt die Messungen der einzelnen Messeinheiten zu mitteln und aus diesen die Zielpunktskoordinaten zu bestimmen, können alternativ aus den vielen Einzelmessungen auch jeweils Zielpunktskoordinaten berechnet und anschliessend aus diesen ein Zielpunktskoordinatenmittelwert gebildet werden. Um die Schwankung des Feld-Controllers durch das manuelle Auslösen eines Vermessungsvorgangs per Knopfdruck zu kompensieren, kann eine Triggerung hinsichtlich des Auslösen eines Vermessungsvorgangs zeitverzögert erfolgen, so dass der Benutzer Zeit hat, das Gerät wieder weitgehend ruhig zu halten.

Zusätzlich oder alternativ können Feld-Controller und Vermessungsgerät gleichlaufende Uhren aufweisen, insbesondere GNSS-basierte Uhren, wodurch einzelne Messdaten zeitlich markierbar sind, 38a. Damit kann eine Vermessung durchgeführt werden, indem Messungen der einzelnen Einheiten fortlaufend und asynchron erfolgen, wodurch eine Triggereinheit unnötig wird. Sind ausreichend hohe Messfrequenzen und zeitliche Überlappung gegeben, können Messdaten, die innerhalb eines kurzen, definierten Zeitraums liegen, als zusammengehörig angesehen und aus diesen Zielpunktskoordinaten berechnet werden. Als Alternative können Messwerte auf einen gemeinsamen Basiszeitpunkt inter- oder extrapoliert werden. Ein Basiszeitpunkt kann unabhängig vorgegeben werden, z.B. zentral durch die Steuer- und Auswerteeinheit, oder durch den Aufnahmezeitpunkt eines Messwertes einer der Messeinheiten definiert sein. Dies ist bevorzugt jene Messeinheit, bei der eine Extra- oder Interpolation wegen nicht abschätzbarer Werteverläufe nicht sinnvoll oder mit der grössten Unsicherheit behaftet wäre.

Die gewonnenen Daten werden an die Steuer- und Auswerteeinheit übermittelt, 38. Die Steuer- und Auswerteeinheit berechnet aus allen Daten die absoluten Koordinaten des Zielpunktes und/oder übermittelt diese Daten und/oder berechneten Koordinaten an ein externes Gerät, 39. Zur Kontrolle der ermittelten (Positions-)Daten können diese dem Benutzer am Feld-Controller-Display angezeigt werden. Zusätzlich kann der Feld-Controller mit einem GNSS-Empfänger ausgestattet werden, so dass eine grobe Plausibilitätsprüfung der ermittelten Positionsdaten durchgeführt werden kann.

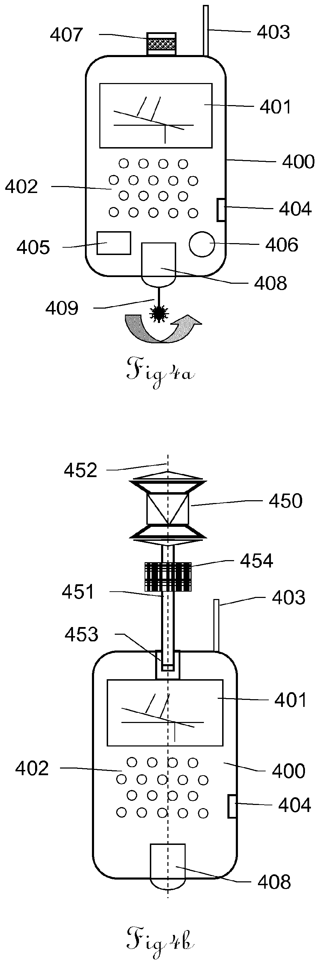

Figur 4a zeigt schematisch ein Ausführungsbeispiel eines erfindungsgemässen Feld-Controllers. Das handliche Gehäuse 400 weist auf der Gehäusefrontseite eine Auswerte- und Steuereinheit mit elektronischem Display 401 auf, welches berührungssensitiv ausgeführt sein kann, und als (weiteres) Eingabemittel eine Tastatur 402. Weiter weist der Feld-Controller auf eine Funkantenne zum Datentransfer 403, insbesondere mit und zur Fernsteuerung einer Totalstation und eine weitere Datenschnittstelle, z.B. einen USB-Anschluss 404. Der Feld-Controller weist zudem eine Einheit 405 zum Bestimmen der räumlichen Orientierung auf, ausgeprägt z.B. als ein 3-Achsen-MEMS-Beschleunigungssensor oder Neigungssensor mit Flüssigkeitshorizont, ausserdem einen Kompass 406. Auf dem Gehäuse 400 sitzt ein retroreflektierendes Objekt 407, ausgebildet beispielsweise als beklebter Zylinder, dessen Mantelfläche mit retroreflektierender Folie beklebt ist. Die Ausmasse und Positionierung des Reflektorzylinders sind relativ zum internen Bezugssystem des Feld-Controllers definiert, und in der im Gehäuse 400 integrierten Auswerte- und Steuereinheit bereits hinterlegt. Am unteren Ende des Gehäuses befindet sich die Entfernungsmesseinheit 408, beispielsweise ein Ultraschall-Distometer mit Laserpointer oder ein Laserentfernungsmesser, wobei insbesondere über ein Schwenkelement z.B. eine Spiegelanordnung die Richtung des Laserstrahls 409 relativ zum Gehäuse veränderbar ist, so dass ein bestimmter Zielpunkt aus verschiedenen räumlichen Orientierungen des Feld-Controllers heraus markierbar und vermessbar ist und der Benutzer eine für ihn günstige Messposition wählen kann. Die Lage des Nullpunkts der Entfernungsmesseinheit 408 relativ zum internen Bezugssystem und ggf. die Messrichtung sind definiert bzw. messbar.

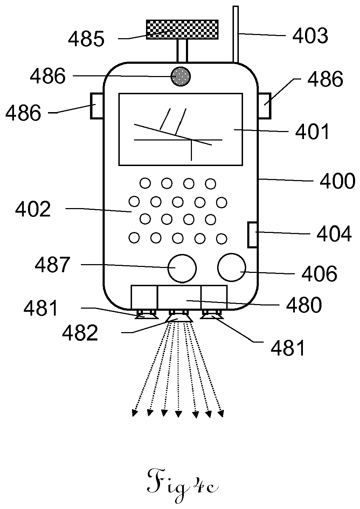

Figur 4b zeigt schematisch ein weiteres Ausführungsbeispiel eines erfindungsgemässen Feld-Controllers. Im Unterschied zum Beispiel aus Figur 4a trägt das Gehäuse einen Prismenreflektor 450 auf einem Aufsatz, einer Abstandshalterung 451, wobei die Längsachse 452 des Reflektors 450 mittig zur Gehäusefrontseite verläuft, parallel zur Längsachse des Gehäuses 400 ist und möglichst nahe bei ihr liegt. Die relative Position des Reflektors 450 ist definiert und in der im Gehäuse 400 integrierten Auswerte- und Steuereinheit entweder bereits hinterlegt oder vom Benutzer einspeicherbar. Der Feld-Controller kann auch als Einheit mit auswechselbarem Reflektor 450 bzw. Abstandshalterung 451 konzipiert sein, um auf einfache Weise an verschiedene Vermessungssituationen angepasst werden zu können. In diesem Fall kann in den Reflektor 450 bzw. in die Abstandshalterung 451 ein Signalgeber, z.B. ein ID-Chip, und in der entsprechenden Verbindungsstelle am Gehäuse ein Signalempfänger verbaut sein, womit die Steuereinheit automatisch den jeweiligen Typ und die vermessungsrelevanten Ausmasse des Reflektoraufsatzes 450/451 erkennt. Zur einfacheren Ausrichtung des Reflektors 450 zu einer Totalstation und/oder optimierten Gewichtsverteilung weist die Verbindungsstelle ein in mindestens eine, insbesondere zur Gehäusefrontebene senkrechten Ebene, die die Reflektorlängsachse enthält, schwenkbares Gelenk 453 auf. Im Gelenk 453 ist mindestens ein Winkelsensor, der beispielsweise mit dem Inkrementalverfahren arbeitet, eingebaut, um den oder die Ausrichtungswinkel des Reflektors 450 relativ zur Gehäusefrontebene zu bestimmen und an die Steuer- und Auswerteeinheit zu übermitteln. Auf der Abstandshalterung ist ein durch eine Kamera der Totalstation optisch aufnehmbares definiertes Muster 454 angebracht. Ein zum Muster 454 korrespondierendes Muster ist in der Totalstation abgespeichert, so dass durch einen Vergleich mit dem durch eine Kamera aufgenommenen Bild des Feld-Controller-Musters 454 die räumliche Orientierung des Musters 454 und damit des Feld-Controllers bestimmbar ist. Figur 4c zeigt schematisch ein drittes Ausführungsbeispiel eines erfindungsgemässen Feld-Controllers. Das Gehäuse ist Träger einer optisch anvisierbaren Einheit, ausgeprägt als Laserstrahldetektor 485 mit mehreren aneinandergrenzenden Detektionszonen. Ein von einer Totalstation ausgesandter Laserstrahl wird vom Detektor erfasst. Beim Erfassen des Laserstrahls innerhalb eines Teilerfassungsbereichs aus mindestens einer Detektionszone bestimmt der Detektor einen Auftreffpunkt des Laserstrahls und leitet aus der entsprechenden mindestens einen Teilerfassungsrichtung eine Einfallsrichtung ab. Durch ein Verknüpfen der bekannten Aussendrichtung des Laserstrahls mit der Einfallsrichtung wird nun die Orientierung des Detektors und damit des Feld-Controllers bestimmt. Ggf. wird ein auf diese Weise nicht ermittelbarer Ausrichtungswinkel wie der Azimuthalwinkel durch einen Kompass 406 und im Besonderen in Kombination mit einem Gyroskop 487 ermittelt. Das Gehäuse weist weiterhin mehrere geodätische Zielobjekte auf, die auf verschiedenen Gehäuseseiten angeordnet sind, und als zylinderförmige Retroreflektoren 486 ausgeprägt sind. Mit der in Figur 4c verwendeten Perspektive sind drei Reflektoren 486 in zwei unterschiedlichen Ansichten zu erkennen, mindestens ein weiterer ist vorteilhaft auf der abgewandten Gehäuserückseite angebracht. Je nach Ausrichtung des erfindungsgemässen Feld-Controllers relativ zum Vermessungsgerät kann der am günstigsten positionierte Reflektor angezielt werden. Aus der bekannten Orientierung des Feld-Controllers kann dieser Reflektor eindeutig identifiziert und damit die korrekte absolute Position des Aufhängepunkts des Feld-Controller-internen Bezugssystems berechnet werden. Die Entfernungsmesseinheit ist in diesem Beispiel als Lichtstrukturen-3D-Scanner 480 ausgeprägt. Der Musterprojektor 482 beleuchtet den zu vermessenden Geländebereich zeitlich sequentiell mit unterschiedlichen Mustern, z.B. Streifenmuster. Die beiden Kameras 481, die sich in bekannter räumlicher Lage zueinander und zum Musterprojektor 482 befinden, wobei sich insbesondere die Sichtfelder der einzelnen Kameras grösstenteils überschneiden, empfangen das projizierte Muster unter einem bekannten Blickwinkel zur Projektion. Die gesuchte dreidimensionale Koordinate eines Zielpunktes im Feld-Controller-internen Bezugssystem ergibt sich als Schnittpunkt der durch einen projizierten Streifen gebildeten Ebene mit der durch einen empfangenen Lichtstrahl gebildeten Geraden. Die absolute Position eines Zielpunktes ergibt sich dann aus der bekannten absoluten Position und Orientierung des Bezugssystems des Feld-Controllers. Prinzipiell lassen sich auf diese Weise auch die Koordinaten aller Punkte eines Geländebereichs, deren Entfernung zum Feld-Controller bestimmt wurde, berechnen, wodurch eine vollständig absolut referenzierte 3D-Punktwolke erhalten wird.

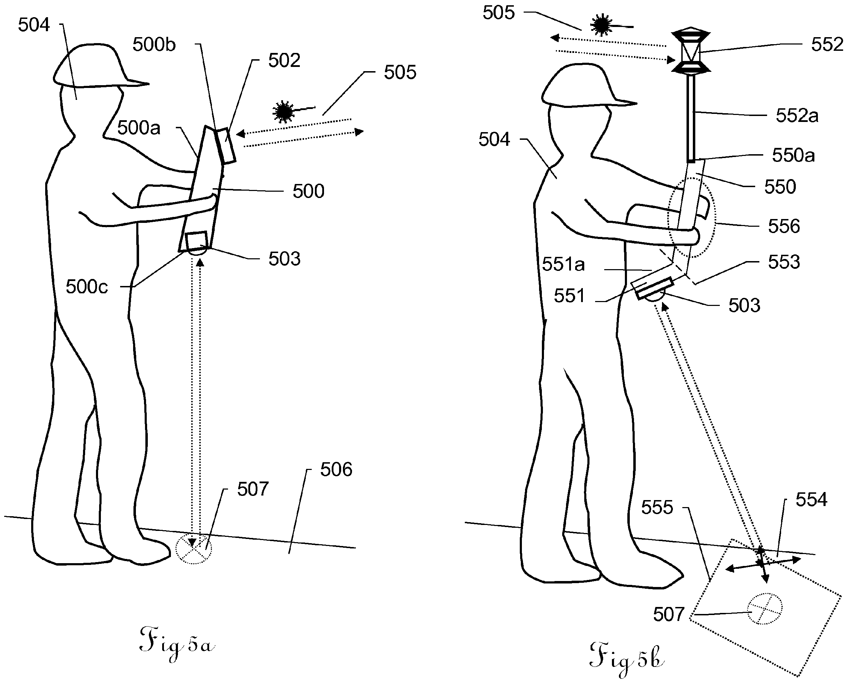

Figur 5a zeigt in einer Seitenansicht ein Anwendungsbeispiel eines Feld-Controllers mit erfindungsgemässer Anordnung von geodätischem Zielobjekt und Entfernungsmesseinheit 503. Das Grössenverhältnis von Feld-Controller zum Benutzer 504 ist nur beispielhaft. Die Frontseite 500a des Gehäuses 500 des Feld-Controllers zeigt zum Benutzer 504. Das Zielobjekt ist als Reflektor 502 ausgeprägt, der Strahlung 505 innerhalb eines bestimmten Raumwinkelbereichs retro-reflektiert, beispielsweise ein Rundprisma. Das Rundprisma ist auf einer "oberen" Gehäuserückseite 500b befestigt, so dass dessen reflektierende Seite parallel zu dieser Seite vom Gehäuse 500 wegzeigt. Diese "obere" Gehäuserückseite 500b ist nicht parallel zur Frontseite 500a, sondern leicht dazu gewinkelt, z.B. in einem 20°-Winkel in Richtung der Frontseite 500a. Die Entfernungsmesseinheit 503 ist im/am Gehäuse 500 an einer "unteren" Gehäuseseite 500c angeordnet. Dabei ist diese Gehäuseseite 500c vorteilhaft in einem Winkel etwas kleiner als 90°, beispielsweise 80°, zur Frontseite 500a angeordnet. Damit kann erfindungsgemäss der Benutzer 504 den Feld-Controller leicht geneigt so halten, dass die Frontseite 500a nicht lotrecht zur Bodenebene 506 ist, sondern leicht dazu gewinkelt, und gleichzeitig die Entfernungsmesseinheit 503 einen Bodenzielpunkt 507 direkt neben dem Benutzer vermessen kann und der Reflektor 502 von einer Totalstation, die sich auf gleicher oder leicht grösserer Höhe über dem Boden befindet, angezielt und die Position mittels Laserstrahlung 505 gemessen werden kann. Eine solche Anordnung ermöglicht eine ergonomische Handhabung des Feld-Controllers hinsichtlich Gewichtsverteilung und Geräteschwerpunkt und Bedienung der Eingabemittel z.B. einer Tastatur und Betrachtung der Ausgabemittel z.B. eines elektronischen Displays.

Figur 5b zeigt in einer Seitenansicht ein weiteres Anwendungsbeispiel eines Feld-Controllers mit erfindungsgemässer Anordnung von geodätischem Zielobjekt und Entfernungsmesseinheit 503. Das Grössenverhältnis von Feld-Controller zum Benutzer 504 ist nur beispielhaft. Das Gehäuse ist nicht als ein einziges quaderähnliches Objekt ausgeprägt, sondern "zusammengesetzt" aus zwei flachen Quadern bzw. quaderähnlichen Prismen 550, 551, die gewinkelt zueinander sind (durch Linie 553 zeichnerisch getrennt). Die Frontseite 551a des "unteren", bodennäheren Quaders 551, kann dann Eingabemittel aufweisen, und auf seiner Unterseite die Entfernungsmesseinheit 503. In dieser erfindungsgemässen Anordnung kann die Entfernungsmesseinheit 503 die Distanz zu einem Zielpunkt 507, der sich leicht vor dem Benutzer befindet, messen. Ist zusätzlich die Messrichtung der Entfernungsmesseinheit 503 veränderbar (durch Richtungskreuz 554 angedeutet), kann der Zielpunkt 507 innerhalb eines bestimmten Bereichs 555 vor und seitlich zum Benutzerstandort liegen.

Ist die Entfernungsmesseinheit 503 als Laserscanner oder RIM-Kamera ausgeprägt, sind die Entfernungen zu einer Vielzahl von Geländepunkten innerhalb des Bereichs 555 bestimmbar und damit, falls erforderlich, die absoluten Positionen aller Geländepunkte, womit eine vollständig absolut referenzierte 3D-Punktwolke erzeugbar ist.

Die Frontseite des "oberen" Gehäuseteils 550 des erfindungsgemässen Feld-Controllers kann ein elektronisches Display aufweisen. Weiter ist der obere Teil 550 Träger eines 360°-Reflektors 552, der auf einer Abstandshalterung 552a befestigt ist, die wiederum auf der "oberen" Gehäuseseite 550a befestigt ist. Die Abstandshalterung 552a weist eine Länge auf, die ausreicht, dass der Reflektor 552 über den Kopf des Benutzers 504 hinausragt, wenn der Benutzer 504 das Feld-Controller-Gehäuse in Brust-/Bauchhöhe hält. Durch diese Anordnung ist der Reflektor 552 auch von einer Totalstation anzielbar und seine Position mit Laserstrahl 505 messbar, wenn der Benutzer dieser den Rücken zuwendet und den Feld-Controller vor sich hält. Die Position und die Längsachsenausrichtung der Abstandshalterung 552a sind dabei so gewählt, dass der Gewichtsvektor des Reflekors 552 auf den Bereich 556 zeigt, in dem der Benutzer das Gehäuse festhält, um ein möglichst geringes Drehmoment zu erzeugen.

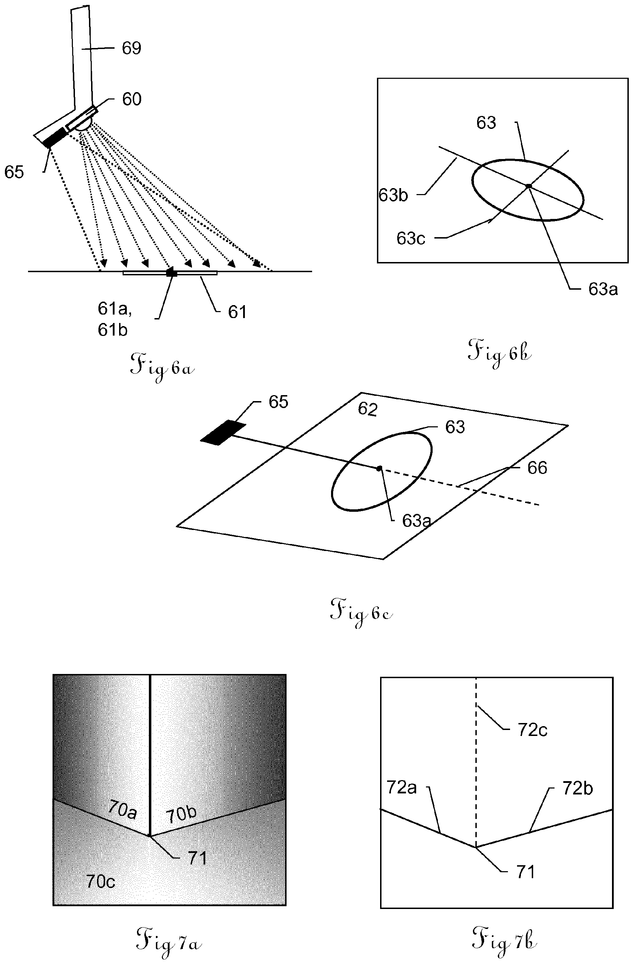

Die Figuren 6a-c zeigen ein Anwendungsbeispiel eines erfindungsgemässen Feld-Controllers 69 mit einer digitalen 2D-Kamera 65, Entfernungsmesseinheit 60 zur Erstellung einer 3D-Punktwolke und Steuer- und Auswerteeinheit mit eingespeicherten Algorithmen zur digitalen Bildverarbeitung und Analyse der 3D-Punktwolke. Im Beispiel sollen die Koordinaten des Mittelpunkts 61a eines Gullydeckels 61 vermessen werden. Wie Figur 6a zeigt, befindet sich der Mittelpunkt in einer Aussparung 61b des Gullydeckes. Die Entfernungsmesseinheit 60 scannt einen Strassenbereich, der den Gullydeckel 61 einschliesst, und speichert die Messdaten als 3D-Punktwolke. Diese wird mittels in der Steuer- und Auswerteeinheit eingespeicherter Algorithmen analysiert, wodurch in einem ersten Schritt die von der Strasse und Gullydeckel gebildete Ebene 62 erkannt und deren Position im Bezugssystem des Feld-Controllers errechnet wird. Die Kamera nimmt ein Bild des Strassenbereichs auf, welches digital verarbeitet wird, um geometrische Formen zu erkennen bzw. zu extrahieren. Wie in Figur 6b dargestellt, wird der Gullydeckel als Ellipse 63 erkannt bzw. aus den Bilddaten eine ideale Ellipse gefittet. Durch entsprechende Algorithmen wird anschliessend aus dem Schnittpunkt der beiden Halbachsen 63b und 63c der Mittelpunkt der idealen Ellipse 63a berechnet. Figur 6c stellt grafisch dar, dass die gesuchten Feld-Controller-internen Koordinaten des Gullydeckelmittelpunkts sich dann ergeben als Schnittpunkt der Halbgeraden 66, die durch den Ellipsenmittelpunkt und das Aufnahmezentrum der 2D-Kamera verläuft, mit der aus den 3D-Punktwolkendaten gebildeten Ebene 62.

Figur 7a und 7b zeigen für einen erfindungsgemässen Feld-Controllers mit einer digitalen 2D-Kamera, Entfernungsmesseinheit zur Erstellung einer 3D-Punktwolke und Steuer- und Auswerteeinheit mit eingespeicherten Algorithmen zur digitalen Bildverarbeitung und Analyse der 3D-Punktwolke ein weiteres Auswertebeispiel. Gemessen werden soll die Entfernung zu einer Hausecke 71. Figur 7a stellt grafisch die Daten einer Entfernungsmessungsmessung des Geländebereichs um die Hausecke 71 dar, bspw. durch eine RIM-Kamera. Helle Bereiche stehen für nahe Punkte, dunkle Bereiche für weiter entfernte Punkte. Eine Analyse der 3D-Daten hinsichtlich des Vorhandenseins geometrischer Formen führt zum Auffinden der von der im Beispiel linken Hauswand gebildeten Ebene 70a, der von der rechten Wand gebildeten Ebene 70b und der vom Boden gebildeten Ebene 70c. Figur 7b zeigt ein Bild des gleichen Geländebereichs, das von der Digitalkamera aufgenommen ist. Dieses wird mittels Bildverarbeitung auf geometrische Eigenschaften untersucht, wodurch die beiden Geraden 72a und 72b gefunden werden. Im Beispiel wird angenommen, dass die Schnittgeraden 72c der beiden Hauswände aufgrund ungünstiger Lichtverhältnisse durch die Bildverarbeitung nicht ermittelbar ist. Die Entfernungsdaten des Zielpunkts 71 ergeben sich dann als Schnittpunkt der Ebenen, die durch das Aufnahmezentrum der 2D-Kamera und die beiden Geraden 72a und 72b verlaufen mit den drei aus dem RIM-Bild ermittelten Ebenen 70a, 70b und 70c.

## Patentansprüche

1. Mobiler Feld-Controller (22, 300, 69) zur Messung und Fernsteuerung, derart ausgebildet, dass er zusammen mit einem eine Entfernungs- und Richtungsmessfunktionalität, insbesondere Winkelmessfunktionalität, aufweisenden fernsteuerbaren geodätischen Vermessungsgerät (11, 21, 320), insbesondere einer Totalstation oder einem Tachymeter, ein System zur koordinativen geodätischen Positionsbestimmung von Zielpunkten (15, 23, 350, 507, 61a) bildet, wobei der Feld-Controller (22, 300, 69) aufweist
• eine Steuer- und Auswerteeinheit mit Benutzereingabe- und Ausgabemittel (310), insbesondere einem elektronischen Display (401), zum Empfangen, Verarbeiten und Senden von Daten (301, 302, 303), dabei zur Fernsteuerung des Vermessungsgeräts (11, 21, 320), und insbesondere zum Auswerten und/oder Aussenden von Messdaten,
• ein handhaltbares Gehäuse (400, 500),
• eine Einheit (405,454,485) zum Bestimmen und/oder Bestimmbarmachen einer räumlichen Orientierung des Feld-Controllers (22, 300) und
• mit dem Feld-Controller (22, 300, 69) mindestens ein Zielpunkt (15, 23, 350, 507, 61a) optisch markierbar ist,
• mindestens ein vom Gehäuse (400, 500) getragenes geodätisches Zielobjekt (13, 26, 312, 407, 450, 486, 502, 552), dessen absolute Zielposition vom Vermessungsgerät (11, 21, 320) hochpräzise bestimmbar ist,
• eine Entfernungsmesseinheit (25, 311, 408, 503, 60, 480), insbesondere eine Einheit zur elektrooptischen oder elektroakustischen Entfernungsmessung, zur bodenkontaktlosen Bestimmung der Entfernung zwischen dem Feld-Controller (22, 300, 69) und dem mindestens einen Zielpunkt (15, 23, 350, 507, 61a),
• wobei das geodätische Zielobjekt (13, 26, 312, 486, 502, 552) und die Entfernungsmesseinheit (25, 311, 408, 503, 60) in definierter räumlicher Bezugsrelation zu einem internen Bezugssystem des Feld-Controllers (22, 300, 69) stehen und
• aus der absoluten Zielposition des geodätischen Zielobjekts (13, 26, 312, 486, 502, 552) mittels der räumlichen Orientierung des Feld-Controllers (22, 300, 69) und der Entfernung zwischen Zielpunkt und Feld-Controller unter Kenntnis der räumlichen Bezugsrelation die absolute Position des Zielpunkts (15, 23, 350, 507, 61a) berechenbar ist.

2. Feld-Controller (22, 300) nach Anspruch 1,
**dadurch gekennzeichnet, dass**
die Steuer- und Auswerteeinheit (310) derart ausgeprägt ist, dass Messdaten, die zu Bestimmung der räumlichen Orientierung des Feld-Controllers (22, 300), der Zielposition des geodätischen Zielobjekts (13, 26, 312, 407, 450, 486, 502, 552) und der Entfernung zwischen dem Feld-Controller (22, 300, 69) und dem mindestens einen Zielpunkt (15, 23, 350, 507, 61a) erfasst werden, teilweise oder vollständig von der Steuer- und Auswerteeinheit (310) ausgewertet werden, insbesondere derart, dass die absolute Position des mindestens einen Zielpunktes (15, 23, 350, 507, 61a) aus den Messdaten berechnet, abgespeichert und über ein Ausgabemittel des Feld-Controllers (22, 300, 69) dem Benutzer zur Verfügung gestellt wird und die Positions- und/oder Messdaten an externe Geräte übermittelbar sind.

3. Feld-Controller (22, 300) nach einem der vorherigen Ansprüche,
**dadurch gekennzeichnet, dass**
der Feld-Controller (22, 300, 69) wenigstens einen Sensor, insbesondere einen Neigungssensor und/oder Beschleunigungssensor (314, 405), aufweist zur Bestimmung von wenigstens einem, insbesondere von zwei, Ausrichtungswinkel oder Änderungen von wenigstens einem Ausrichtungswinkel um wenigstens eine, insbesondere zwei Achsen der räumlichen Orientierung des Feld-Controllers (22, 300, 69).

4. Feld-Controller (22, 300, 69) nach einem der vorherigen Ansprüche,
**dadurch gekennzeichnet, dass**
der Feld-Controller (22, 300, 69) eine vom Vermessungsgerät optisch anvisierbare Einheit (313, 454, 485) aufweist, anhand dessen durch das Vermessungsgerät (11, 21, 320) oder den Feld-Controller (22, 300, 69) der Ausrichtungswinkel um wenigstens eine, insbesondere zwei Achsen, der räumlichen Orientierung des Feld-Controllers (22, 300) bestimmt wird, insbesondere wobei
• die optisch anvisierbare Einheit (313, 454) ein vorbekanntes optisches Muster (454) ist, dessen vom Vermessungsgerät (11, 21, 320) aufgenommenes Bild mit einem gespeicherten korrespondierenden Muster verglichen wird, insbesondere wodurch die Ausrichtungswinkel um alle drei Achsen der räumlichen Orientierung des Feld-Controllers (22, 300, 69) bestimmt werden oder
• die optisch anvisierbare Einheit (313, 454, 485) ein Laserstrahleinfallsrichtungsbestimmer (485) ist, der die Einfallsrichtung eines vom Vermessungsgerät ausgesandten Laserstrahls bestimmt.

5. Feld-Controller (22, 300, 69) nach einem der vorherigen Ansprüche,
**dadurch gekennzeichnet, dass**
das geodätische Zielobjekt (13, 26, 312, 407, 450, 486, 502, 552) retroreflektierend ist, insbesondere ausgeprägt als Prismenreflektor (13, 26, 450, 502, 552) insbesondere wobei der Feld-Controller (22, 300) eine Aufsatz (451, 552a) definierter Länge aufweist, mittels der der Reflektor (13, 26, 450, 552) vom Gehäuse getragen wird.

6. Feld-Controller (22, 300, 69) nach einem der vorherigen Ansprüche,
**dadurch gekennzeichnet, dass**
die Entfernungsmesseinheit (25, 311, 408, 503, 60) als ein Laserentfernungsmesser ausgebildet ist, insbesondere mit einer Laserquelle zur Emission optisch sichtbaren Laserlichts (409).

7. Feld-Controller (22, 300, 69) nach einem der vorherigen Ansprüche,
**dadurch gekennzeichnet, dass**
die Entfernungsmesseinheit (25, 311, 408, 503, 60) eine manuell oder automatisiert führbare Antriebseinheit zum ein- oder zweiachsiges Ausrichten der Messrichtung und Mittel zum Bestimmen der Messrichtung relativ zu einer Nullachse aufweist.

8. Feld-Controller (22, 300, 69) nach einem der vorherigen Ansprüche,
**dadurch gekennzeichnet, dass**
der Feld-Controller eine digitale Kamera (65) aufweist, die ein digitales Bild eines Zielpunktgeländebereichs aufnimmt, welches dem Benutzer auf dem elektronischen, insbesondere berührungssensitiven, Display (401) angezeigt wird, insbesondere wobei mittels des digitalen Bilds mindestens ein Zielpunkt (15, 23, 350, 507, 61a) zwecks Positionsbestimmung oder Markierung manuell oder automatisiert ausgewählt wird.

9. Feld-Controller (22, 300, 69) nach einem der vorherigen Ansprüche,
**dadurch gekennzeichnet, dass**
die Entfernungsmesseinheit (503, 60) und die Steuer- und Auswerteeinheit derart ausgeprägt sind, dass die Entfernungen einer Vielzahl von Geländepunkten innerhalb eines bestimmten zusammenhängenden Bereichs (555) erfassbar sind bei jeweils bekannter oder synchronisiert bestimmter Messrichtung und die gewonnenen Daten als 3D-Punktwolke gespeichert werden, insbesondere wobei die Entfernungsmesseinheit (503, 60) ausgeprägt ist als
• Laserscanner,
• Range-Image-Kamera,
• Stereokamera oder
• Lichtstrukturen-3D-Scanner (480),
insbesondere wobei die 3D-Daten auf dem elektronischen Display (401) visualisiert werden und mindestens ein Punkt manuell oder automatisiert ausgewählt wird.

10. Feld-Controller (22, 300, 69) nach Anspruch 8 oder 9,
**dadurch gekennzeichnet, dass**
in die Steuer- und Auswerteeinheit (310) Algorithmen eingespeichert sind, mittels derer
• eine Analyse des digitales Bilds und/oder der 3D-Punktwolke hinsichtlich bestimmter geometrischer Eigenschaften durchführbar ist, insbesondere zum automatischen Auffinden und/oder Einpassen geometrischer Formen (62, 63, 70a, 70b, 70c, 72a, 72b),
• aus den analysierten geometrischen Eigenschaften ein oder mehrere zur Zielpunktsidentifikation dienende Punkte (63a) identifizierbar oder ableitbar sind, insbesondere der oder die Zielpunkte (71) selbst,
• analysierte geometrische Eigenschaften und identifizierte oder abgeleitete Punkte auf dem elektronischen Display (401) dem digitalen Bild oder der visualisierten 3D-Punktwolke überlagerbar sind,
• Positionsdaten der identifizierten oder abgeleitete Punkte aus den der 3D-Punktwolke zugrunde liegenden Messdaten direkt übernommen oder durch Berechnung von Schnittpunkten der eingepassten geometrischen Formen ermittelt werden oder eine Messung einer Zielpunktsentfernung auf Grundlage der Zielpunktsidentifikation durchgeführt wird.

11. Feld-Controller (22, 300, 69) nach einem der vorherigen Ansprüche,
**dadurch gekennzeichnet, dass**
die Steuer- und Auswerteeinheit (310) aus der bestimmten räumlichen Orientierung des Feld-Controllers (22, 300, 69), der Zielposition des geodätischen Zielobjekts und Positionsdaten der 3D-Punktwolke die absolute Position wenigstens eines Punktes, insbesondere aller Punkte, der 3D-Punktwolke berechnet.

12. Feld-Controller (22, 300, 69) nach einem der vorherigen Ansprüche,
**dadurch gekennzeichnet, dass**
das Gehäuse (400, 500) ein in einer oder zwei Ebenen innerhalb je eines bestimmten Winkelbereichs drehbares Gelenk (453), an dem das Zielobjekt (13, 26, 312, 407, 450, 502, 552) befestigt ist, aufweist, wobei das Gelenk (453) einen oder mehrere absolute oder inkrementale Positionssensoren aufweist zur Messung des mindestens einen Ausrichtungswinkels relativ zu einer Nullachse.

13. Feld-Controller (22, 300, 69) nach einem der vorherigen Ansprüche,
**dadurch gekennzeichnet, dass**
das Gehäuse (400, 500) und der Reflektor (13, 26, 450, 552) bzw. der Aufsatz (451, 552a) Befestigungen derart aufweist, dass Reflektor (13, 26, 450, 552) bzw. Aufsatz austauschbar sind, insbesondere wobei die Aufsatz (451, 552a) eine Codierung aufweist, mittels derer die Länge des Aufsatzes (451, 552a) und damit die räumliche Bezugsrelation des Reflektors (13, 26, 450, 552) zum Bezugspunkt des Feld-Controllers (22, 300, 69) von der Steuer- und Auswerteeinheit automatisch ermittelt wird.

14. Feld-Controller (22, 300, 69) nach einem der vorherigen Ansprüche,
**dadurch gekennzeichnet, dass**
die Steuer- und Auswerteeinheit (310) derart ausgebildet ist, dass die Positionsbestimmung wenigstens eines Zielpunktes (15, 23, 350, 507, 61a) vollständig vom Ort eines Zielpunkts (15, 23, 350, 507, 61a) aus durchführbar ist, insbesondere dadurch, dass
• die Steuer- und Auswerteeinheit (310) eine Triggereinheit aufweist, mit der synchronisierte Messungen (34, 38a) der Zielposition des geodätischen Zielobjekts (37), der Entfernung zwischen Feld-Controller und Zielpunkt (35) und der räumlichen Orientierung des Feld-Controllers (36) initialisierbar sind, oder
• die Steuer- und Auswerteeinheit (310) derart ausgeprägt ist, dass während eines Messvorgangs Messungen (34, 38a) der Zielposition des geodätischen Zielobjekts (37), der Entfernung zwischen Feld-Controller und Zielpunkt (35) und der räumlichen Orientierung des Feld-Controllers (36) bezüglich eines Zielpunktes mehrfach durchgeführt werden und die absolute Zielpunktsposition sich ergibt aus den Mittelwerten der Einzelmessungen oder als Mittelwert der mehreren absoluten Zielpunktskoordinaten, und/oder
• der Feld-Controller (22, 300, 69) und das geodätische Vermessungsgerät (11, 21, 320) gleichlaufende, insbesondere GNSS-basierte, Uhren aufweisen, anhand derer einzelne Messdaten zeitlich markierbar sind.

15. System aus einem Feld-Controller (22, 300, 69) nach einem der vorherigen Ansprüche und einem eine Entfernungs- und Richtungsmessfunktionalität, insbesondere Winkelmessfunktionalität, aufweisenden vom Feld-Controller (22, 300, 69) fernsteuerbaren geodätischen Vermessungsgerät (11, 21, 320),
**dadurch gekennzeichnet, dass**
synchronisiert oder fortlaufend/periodisch (34, 38a) durchführbar sind
• eine Bestimmung der räumlichen Orientierung des Feld-Controllers relativ zum absoluten äusseren Bezugssystem mittels des Feld-Controllers und/oder des Vermessungsgeräts (36),
• vom Vermessungsgerät eine absolute Positionsbestimmung des geodätischen Zielobjekts des Feld-Controllers (37), insbesondere wobei im Fall eines mehrere Zielobjekte aufweisenden Feld-Controllers (37) das Vermessungsgerät automatisch das am günstigsten gerichtete Zielobjekt anzielt,
• eine Bestimmung der Position eines geodätischen Zielpunkts relativ zu einem Feld-Controller-internen Bezugssystem durch den Feld-Controller (35), woraus die Steuer- und Auswerteeinheit des Feld-Controllers die absoluten Zielpunktskoordinaten berechnet (39).

## Claims

1. Mobile field controller (22, 300, 69) for measurement and remote control, configured in such a way that it forms a system for coordinative geodetic determination of the position of target points (15, 23, 350, 507, 61a) together with a remote controllable geodetic surveying device (11, 21, 320), more particularly a total station or tachymeter, having a distance and direction measurement functionality, more particularly an angle measurement functionality, wherein the field controller (22, 300, 69) comprises
• a control and evaluation unit with user input and output means (310), more particularly an electronic display (401), for receiving, processing and transmitting data (301, 302, 303), withal for controlling the surveying device (11, 21, 320) remotely and in particular for evaluating and/or transmitting measurement data,
• a housing (400, 500) that can be hand-held,
• a unit for determining or enabling determination of a spatial orientation of the field controller (22, 300) and
• wherein at least one target point (15, 23, 350, 507, 61a) can be optically marked by means of the field controller (22, 300, 69),
• at least one geodetic target object (13, 26, 312, 407, 450, 486, 502, 522) supported by the housing (400, 500), the absolute target position of which target object can be determined very precisely by the surveying device (11, 21, 320),
• a distance-measuring unit (25, 311, 408, 503, 60, 480), more particularly a unit for measuring distance by electrooptic or electroacoustic means, for determining the distance between the field controller (22, 300, 69) and the at least one target point (15, 23, 350, 507, 61a) without contacting the ground,
• wherein the geodetic target object (13, 26, 312, 486, 502, 552) and the distance-measuring unit (25, 311, 408, 503, 60) are in a defined spatial reference relationship to an internal reference system of the field controller (22, 300, 69) and
• the absolute position of the target point (15, 23, 350, 507, 61a) can be calculated by means of the spatial orientation of the field controller (22, 300, 69) and the distance between the field controller and the at least one target point, knowing the spatial reference relationship, from the absolute position of the geodetic target object (13, 26, 312, 486, 502, 552) .

2. Field controller (22, 300) according to Claim 1,
**characterized in that**
the control and evaluation unit (310) is developed in such a way that measurement data, which are registered for determining the spatial orientation of the field controller (22, 300), the target position of the geodetic target object (13, 26, 312, 407, 450, 486, 502, 552) and the distance between the field controller (22, 300, 69) and the at least one target point (15, 23, 350, 507, 61a), are partly or wholly evaluated by the control and evaluation unit (310), more particularly in such a way that the absolute position of the at least one target point (15, 23, 350, 507, 61a) is calculated from the measurement data, stored and made available to the user by means of an output means of the field controller (22, 300, 69) and the position data and/or measurement data can be transmitted to external devices.

3. Field controller (22, 300) according to any one of the preceding claims,
**characterized in that**
the field controller (22, 300, 69) has at least one sensor, more particularly an inclination sensor and/or an accelerometer (314, 405), for determining at least one alignment angle, more particularly two alignment angles, or changes of at least one alignment angle about at least one axis, more particularly two axes, of the spatial orientation of the field controller (22, 300, 69).

4. Field controller (22, 300, 69) according to any one of the preceding claims,
**characterized in that**
the field controller (22, 300, 69) has a unit (313, 454, 485) that can be sighted optically by the surveying device, on the basis of which unit the alignment angle about at least one axis, more particularly about two axes, of the spatial orientation of the field controller (22, 300) is determined by the surveying device (11, 21, 320) or the field controller (22, 300, 69), in particular wherein
• the unit (313, 454) that can be sighted optically is an optical pattern (454) known in advance, the image of which recorded by the surveying device (11, 21, 320) is compared to a stored corresponding pattern, more particularly as a result of which the alignment angles about all three axes of the spatial orientation of the field controller (22, 300, 69) are determined, or
• the unit (313, 454, 485) that can be sighted optically is a laser beam direction of incidence determination unit (485), which determines the direction of incidence of a laser beam emitted by the surveying device.

5. Field controller (22, 300, 69) according to any one of the preceding claims,
**characterized in that**
the geodetic target object (13, 26, 312, 407, 450, 486, 502, 552) is retroreflective, more particularly developed as a prism reflector (13, 26, 450, 502, 552), more particularly wherein the field controller (22, 300) has an attachment (451, 552a) of a defined length, by means of which the reflector (13, 26, 450, 552) is supported by the housing.

6. Field controller (22, 300, 69) according to any one of the preceding claims,
**characterized in that**
the distance-measuring unit (25, 311, 408, 503, 60) is embodied as a laser rangefinder, in particular with a laser source for emitting optically visible laser light (409).

7. Field controller (22, 300, 69) according to any one of the preceding claims,
**characterized in that**
the distance-measuring unit (25, 311, 408, 503, 60) has a drive unit, which can be guided in a manual or automated manner, for one-axis or two- axes alignment of the measuring direction and means for determining the measuring direction relative to a zero axis.

8. Field controller (22, 300, 69) according to any one of the preceding claims,
**characterized in that**
the field controller has a digital camera (65), which records a digital image of a target point terrain region, which is displayed to the user on the electronic, more particularly touch sensitive, display (401), more particularly wherein at least one target point (15, 23, 350, 507, 61a) is selected in a manual or automated manner for determining the position or marking by means of the digital image.

9. Field controller (22, 300, 69) according to any one of the preceding claims,
**characterized in that**
the distance-measuring unit (503, 60) and the control and evaluation unit are developed in such a way that the distances of a multiplicity of terrain points can be registered within a specific contiguous region (555) in the case of a respectively known or synchronously determined measuring direction and the obtained data are stored as 3D point cloud, more particularly wherein the distance-measuring unit (503, 60) is developed as
• laser scanner,
• range image camera,
• stereo camera or
• light-structure 3D scanner (480),
more particularly wherein the 3D data are visualized on the electronic display (401) and at least one point is selected in a manual or automated manner.

10. Field controller (22, 300, 69) according to Claim 8 or 9,
**characterized in that**
algorithms are saved to the control and evaluation unit (310), by means of which algorithms
• an analysis of the digital image and/or of the 3D point cloud in respect of specific geometric properties can be performed, more particularly for automatically finding and/or fitting geometric forms (62, 63, 70a, 70b, 70c, 72a, 72b),
• one or more points (63a) serving to identify a target point, more particularly the target point or points (71) themselves, can be identified or derived from the analyzed geometric properties,
• analyzed geometric properties and identified or derived points can be superposed onto the digital image or onto the visualized 3D point cloud on the electronic display (401),
• position data of the identified or derived points are adopted directly from the measurement data underlying the 3D point cloud or are established by calculating points of intersection of the fitted geometric forms or a target point distance measurement is performed on the basis of the target point identification.

11. Field controller (22, 300, 69) according to any one of the preceding claims,
**characterized in that**
the control and evaluation unit (310) calculates the absolute position of at least one point, more particularly all points, of the 3D point cloud from the determined spatial orientation of the field controller (22, 300, 69), from the target position of the geodetic target object and from position data of the 3D point cloud.

12. Field controller (22, 300, 69) according to any one of the preceding claims,
**characterized in that**
the housing (400, 500) has a joint (453), which can be rotated in one or two planes within in each case a specific angular range and which has fastened to it the target object (13, 26, 312, 407, 450, 502, 552), wherein the joint (453) has one or more absolute or incremental position sensors for measuring the at least one alignment angle relative to a zero axis.

13. Field controller (22, 300, 69) according to any one of the preceding claims,
**characterized in that**
the housing (400, 500) and the reflector (13, 26, 450, 552) or the attachment (451, 552a) has fasteners in such a way that reflector (13, 26, 450, 552) or attachment are replaceable, more particularly wherein the attachment (451, 552a) has an encoding, by means of which the length of the attachment (451, 552a) and hence the spatial reference relationship of the reflector (13, 26, 450, 552) to the reference point of the field controller (22, 300, 69) is established automatically by the control and evaluation unit.

14. Field controller (22, 300, 69) according to any one of the preceding claims,
**characterized in that**
the control and evaluation unit (310) is configured in such a way that determining the position of at least one target point (15, 23, 350, 507, 61a) can be carried out completely from the location of a target point (15, 23, 350, 507, 61a), more particularly **in that**
• the control and evaluation unit (310) has a trigger unit, by means of which synchronized measurements (34, 38a) of the target position of the geodetic target object (37), the distance between field controller and target point (35) and the spatial orientation of the field controller (36) can be initialized, or
• the control and evaluation unit (310) is developed in such a way that measurements (34, 38a) of the target position of the geodetic target object (37), the distance between field controller and target point (35) and the spatial orientation of the field controller (36) in respect of a target point are performed a number of times during a measurement process and the absolute target point position emerges from the mean values of the individual measurements or as mean value of the plurality of absolute target point coordinates, and/or
• the field controller (22, 300, 69) and the geodetic surveying device (11, 21, 320) have synchronized, more particularly GNSS-based, clocks, on the basis of which individual measurement data can be marked in terms of time.

15. System comprising a field controller (22, 300, 69) according to any one of the preceding claims and a geodetic surveying device (11, 21, 320) remote controllable by the field controller (22, 300, 69), the geodetic surveying device (11, 21, 320) having a distance and direction measurement functionality, more particularly an angle measurement functionality,
**characterized in that**
the following can be performed in a synchronized or continuous/periodic (34, 38a) manner:
• determination of the spatial orientation of the field controller relative to the absolute external reference system by means of the field controller and/or the surveying device (36),
• absolute determination of the position of the geodetic target object of the field controller (37) by the surveying device, more particularly wherein the surveying device automatically targets the most expediently aligned target object in the case of a field controller (37) having a plurality of target objects,
• determination of the position of a geodetic target point relative to a field controller-internal reference system by the field controller (35),
from which the control and evaluation unit of the field controller calculates (39) the absolute target point coordinates.

## Revendications

1. Contrôleur de terrain mobile (22, 300, 69) à fonctions de mesure et commande à distance, conçu de manière à former, avec un appareil de mesure (11, 21, 320) géodésique télécommandable doté d'une fonctionnalité de mesure de distance et de direction, notamment une fonctionnalité de mesure d'angle, ledit appareil de mesure consistant notamment en une station totale ou un tachymètre, un système permettant de déterminer les coordonnées géodésiques de points cibles (15, 23, 350, 507, 61a), ledit contrôleur de terrain (22, 300, 69) présentant
• une unité de commande et d'évaluation (310) dotée d'un moyen de communication en entrée/sortie avec un utilisateur, notamment un écran électronique (401), destiné à recevoir, traiter et émettre des données (301, 302, 303), permettant ainsi de télécommander l'appareil de mesure (11, 21, 320) et notamment d'évaluer et/ou d'émettre des données de mesure,
• un boîtier portable (400, 500),
• une unité (405) destinée à déterminer et/ou à permettre à déterminer une orientation spatiale du contrôleur de terrain (22, 300), ledit contrôleur de terrain (22, 300, 69) permettant de marquer optiquement au moins un point cible (15, 23, 350, 507, 61a),
• au moins un objet cible géodésique (13, 26, 312, 407, 450, 486, 502, 552), porté par le boîtier (400, 500), dont la position cible absolue peut être déterminée avec une haute précision par l'appareil de mesure (11, 21, 320),
• une unité de mesure de distance (25, 311, 408, 503, 60, 480), notamment une unité conçue pour la mesure électro-optique ou électroacoustique des distances, destinée à déterminer, sans contact avec le sol, la distance séparant le contrôleur de terrain (22, 300, 69) et l'au moins un point cible (15, 23, 350, 507, 61a),
dans lequel
• l'objet cible géodésique (13, 26, 312, 486, 502, 552) et l'unité de mesure de distance (25, 311, 408, 503, 60) ont dans l'espace une position relative dans l'espace définie, par rapport à un système de référence interne du contrôleur de terrain (22, 300, 69), et
• la position absolue du point cible (15, 23, 350, 507, 61a) peut être calculée à partir de la position cible absolue de l'objet cible géodésique (13, 26, 312, 486, 502, 552), au moyen de l'orientation spatiale du contrôleur de terrain (22, 300, 69) et de la distance séparant le point cible et le contrôleur de terrain, en ayant connaissance de la position relative dans l'espace.

2. Contrôleur de terrain (22, 300) selon la revendication 1,
**caractérisé en ce que**
l'unité de commande et d'évaluation (310) est telle qu'elle évalue de manière partielle ou complète les données de mesure relevées en vue de déterminer l'orientation spatiale du contrôleur de terrain (22, 300), la position cible de l'objet cible géodésique (13, 26, 312, 407, 450, 486, 502, 552) et la distance séparant le contrôleur de terrain (22, 300, 69) et l'au moins un point cible (15, 23, 350, 507, 61a), notamment de manière que la position absolue de l'au moins un point cible (15, 23, 350, 507, 61a) soit calculée à partir des données de mesure, enregistrée et mise à la disposition de l'utilisateur au moyen d'un moyen de communication en sortie du contrôleur de terrain (22, 300, 69), et que les données de position et/ou de mesure puissent être transmises à des appareils externes.

3. Contrôleur de terrain (22, 300) selon l'une des revendications précédentes,
**caractérisé en ce que**
le contrôleur de terrain (22, 300, 69) présente au moins un capteur, notamment un capteur d'inclinaison et/ou d'accélération (314, 405), destiné à déterminer au moins un et notamment deux angles, ou des modifications d'au moins un angle, le ou les angles étant relatifs à l'orientation spatiale du contrôleur de terrain (22, 300, 69) par rapport à au moins un et notamment deux axes.

4. Contrôleur de terrain (22, 300, 69) selon l'une des revendications précédentes,
**caractérisé en ce que**
le contrôleur de terrain (22, 300, 69) présente une unité pouvant être optiquement visée (313, 454, 485) par l'appareil de mesure et grâce à laquelle l'appareil de mesure (11, 21, 320) ou le contrôleur de terrain (22, 300, 69) détermine l'angle par rapport à au moins un et notamment deux axes, ledit angle étant relatif à l'orientation spatiale du contrôleur de terrain (22, 300), notamment dans lequel
• l'unité pouvant être optiquement visée (313, 454) est un motif optique préalablement connu (454), dont l'image captée par l'appareil de mesure (11, 21, 320) est comparée à un motif correspondant enregistré, notamment moyennant quoi les angles de l'orientation spatiale du contrôleur de terrain (22, 300, 69) sont déterminés par rapport aux trois axes, ou
• l'unité pouvant être optiquement visée (313, 454, 485) est un dispositif de détermination de la direction d'incidence d'un faisceau laser (485) qui détermine la direction d'incidence d'un faisceau laser émis par l'appareil de mesure.

5. Contrôleur de terrain (22, 300, 69) selon l'une des revendications précédentes,
**caractérisé en ce que**
l'objet cible géodésique (13, 26, 312, 407, 450, 486, 502, 552) est rétroréfléchissant, en consistant notamment en un réflecteur prismatique (13, 26, 450, 502, 552), le contrôleur de terrain (22, 300) présentant notamment un élément rapporté (451, 552a) de longueur définie, au moyen duquel le boîtier porte le réflecteur (13, 26, 450, 552).

6. Contrôleur de terrain (22, 300, 69) selon l'une des revendications précédentes,
**caractérisé en ce que**
l'unité de mesure de distance (25, 311, 408, 503, 60) est conçue comme un distancemètre laser, possédant notamment une source laser destinée à émettre une lumière laser optiquement visible (409).

7. Contrôleur de terrain (22, 300, 69) selon l'une des revendications précédentes,
**caractérisé en ce que**
l'unité de commande et d'évaluation (25, 311, 408, 503, 60) présente une unité d'entraînement à commande manuelle ou automatisée, destinée à orienter la direction de mesure par rapport à un ou deux axes, et des moyens permettant de déterminer la direction de mesure par rapport à un axe neutre.

8. Contrôleur de terrain (22, 300, 69) selon l'une des revendications précédentes,
**caractérisé en ce que**
le contrôleur de terrain présente une caméra numérique (65) qui capte une image numérique d'une zone de terrain autour du point cible, laquelle est présentée à l'utilisateur sur l'écran électronique (401), notamment tactile ; au moins un point cible (15, 23, 350, 507, 61a) étant notamment choisi de manière manuelle ou automatisée au moyen de ladite image numérique afin de déterminer ou de marquer une position.

9. Contrôleur de terrain (22, 300, 69) selon l'une des revendications précédentes,
**caractérisé en ce que**
l'unité de mesure de distance (503, 60) et l'unité de commande et d'évaluation sont telles qu'il est possible de capter la distance de plusieurs points sur le terrain dans une zone connexe définie (555) pour chaque direction de mesure définie connue ou déterminée de manière synchronisée, et les données obtenues sont enregistrées sous la forme d'un nuage de points 3D, l'unité de mesure de distance (503, 60) consistant notamment en
• un scanneur laser,
• une caméra à images dystopographiques,
• une caméra stéréoscopique ou
• un scanneur 3D de structures lumineuses (480),
les données 3D étant notamment visualisées sur l'écran électronique (401) et au moins un point étant choisi de manière manuelle ou automatisée.

10. Contrôleur de terrain (22, 300, 69) selon la revendication 8 ou 9,
**caractérisé en ce que**
des algorithmes sont enregistrés dans l'unité de commande et d'évaluation (310), au moyen desquels
• il est possible d'analyser l'image numérique et/ou le nuage de points 3D, concernant certaines propriétés géométriques, notamment afin de trouver et/ou d'adapter automatiquement des formes géométriques (62, 63, 70a, 70b, 70c, 72a, 72b),
• à partir des propriétés géométriques analysées, il est possible d'identifier ou de déduire un ou plusieurs points (63a) servant à l'identification du/des point(s) cible(s), notamment le ou les points cibles (71) eux-mêmes,
• les propriétés géométriques analysées et les points identifiés ou déduits peuvent être superposés à l'image numérique ou au nuage de points 3D visualisé, sur l'écran électronique (401),
• les données de position des points identifiés ou déduits sont repris directement des données de mesure sous-tendant le nuage de points 3D ou sont obtenus par calcul des points d'intersection des formes géométriques adaptées, ou bien il est effectué une mesure de distance d'un point cible à partir de l'identification du point cible.

11. Contrôleur de terrain (22, 300, 69) selon l'une des revendications précédentes,
**caractérisé en ce que**
à partir de l'orientation spatiale déterminée du contrôleur de terrain (22, 300, 69), de la position cible de l'objet cible géodésique et des données de position du nuage de points 3D, l'unité de commande et d'évaluation (310) calcule la position absolue d'au moins un point, notamment de tous les points, du nuage de points 3D.

12. Contrôleur de terrain (22, 300, 69) selon l'une des revendications précédentes,
**caractérisé en ce que**
le boîtier (400, 500) présente une articulation (453) à laquelle est fixé l'objet cible (13, 26, 312, 407, 450, 502, 552) et permettant une rotation dans un ou deux plans disposant chacun d'un certain intervalle angulaire, l'articulation (453) présentant un ou plusieurs capteurs de position absolue ou incrémentale destinés à mesurer l'au moins un angle d'orientation par rapport à un axe neutre.

13. Contrôleur de terrain (22, 300, 69) selon l'une des revendications précédentes,
**caractérisé en ce que**
le boîtier (400, 500) et le réflecteur (13, 26, 450, 552) ou l'élément rapporté (451, 552a) présentent des fixations permettant que le réflecteur (13, 26, 450, 552) et l'élément rapporté soient interchangeables, l'élément rapporté (451, 552a) présentant notamment un codage au moyen duquel l'unité de commande et d'évaluation obtient automatiquement la longueur de l'élément rapporté (451, 552a) et ainsi la position relative dans l'espace du réflecteur (13, 26, 450, 552) par rapport au point de référence du contrôleur de terrain (22, 300, 69).

14. Contrôleur de terrain (22, 300, 69) selon l'une des revendications précédentes, **caractérisé en ce que**
l'unité de commande et d'évaluation (310) est conçue de manière que la position d'au moins un point cible (15, 23, 350, 507, 61a) peut être totalement déterminée à partir de l'emplacement d'un point cible (15, 23, 350, 507, 61a), notamment **en ce que**
• l'unité de commande et d'évaluation (310) présente une unité de déclenchement avec laquelle il est possible de démarrer des mesures synchronisées (34, 38a) de la position cible de l'objet cible géodésique (37), de la distance séparant le contrôleur de terrain et le point cible (35) et de l'orientation spatiale du contrôleur de terrain (36), ou
• l'unité de commande et d'évaluation (310) est telle que, lors d'un processus de mesurage, il est effectué, concernant un point cible, des mesures (34, 38a) multiples de la position cible de l'objet cible géodésique (37), de la distance séparant le contrôleur de terrain et le point cible (35) et de l'orientation spatiale du contrôleur de terrain (36), et la position absolue du point cible est obtenue à partir des valeurs moyennes des mesures individuelles ou en tant que valeur moyenne de la pluralité de coordonnées absolues du point cible, et/ou
• le contrôleur de terrain (22, 300, 69) et l'appareil de mesure géodésique (11, 21, 320) possèdent des horloges simultanées, notamment basées sur le GNSS, qui permettent d'horodater individuellement les données de mesure.

15. Système composé d'un contrôleur de terrain (22, 300, 69) selon l'une des revendications précédentes et d'un appareil de mesure (11, 21, 320) géodésique télécommandable par le contrôleur de terrain (22, 300, 69) et possédant une fonctionnalité de mesure de distance et de direction, notamment une fonctionnalité de mesure d'angle,
**caractérisé en ce que**
les actions suivantes sont exécutables de manière synchronisée ou en continu/périodiquement (34, 38a)
• détermination (36) de l'orientation spatiale du contrôleur de terrain par rapport au système de référence extérieur absolu, au moyen du contrôleur de terrain et/ou de l'appareil de mesure,
• détermination (37), par l'appareil de mesure, d'une position absolue de l'objet cible géodésique du contrôleur de terrain, l'appareil de mesure visant notamment automatiquement l'objet cible le mieux orienté, dans le cas d'un contrôleur de terrain présentant plusieurs objets cibles,
• détermination (35), par le contrôleur de terrain, de la position d'un point cible géodésique par rapport à un système de référence interne au contrôleur de terrain,
à la suite de quoi l'unité de commande et d'évaluation du contrôleur de terrain calcule (39) les coordonnées absolues du point cible.
